# EUROPEAN PATENT SPECIFICATION

(11) **EP 3 228 178 B1**
(45) Date of publication and mention of the grant of the patent: **02.09.2020**
(21) Application number: 17162239.2
(22) Date of filing: 22.03.2017
(51) Int. Cl.: A01F 15/07, A01F 15/08

(54) **BALE FORMING SYSTEM AND METHOD WITH A BALE TRANSFER UNIT COMPRISING A BALE PUSHER**
BALLENFORMUNGSSYSTEM UND -VERFAHREN MIT BALLENÜBERTRAGUNGSEINHEIT MIT EINEM BALLENSCHIEBER
SYSTÈME ET PROCÉDÉ DE FORMATION DE BALLES AYANT UNE UNITÉ DE TRANSFERT DE BALLES COMPRENANT UN POUSSOIR DE BALLES

(30) Priority: 22.03.2016 NL 2016474
(43) Date of publication of application: 11.10.2017
(73) Proprietor: Forage Innovations B.V., 3147 PB Maassluis (NL)
(72) Inventor: BORCHERS, Jürgen, 3147 PB MAASSLUIS (NL)
(74) Representative: AGCO Intellectual Property Department

(56) References cited:
- EP-A1- 1 077 025
- EP-A1- 1 151 657
- EP-A1- 1 726 204
- EP-A1- 2 090 153
- US-A1- 2004 103 632
- US-A1- 2008 041 028

## Description

### FIELD OF THE INVENTION

The invention refers to a bale forming system and to a method for forming a bale from loose material, in particular a round-cylindrical bale from loose agricultural crop material. Such a bale forming system forms under pressure a bale in a bale forming chamber, ejects the bale out of the bale forming chamber, and moves the ejected bale away from the bale forming chamber.

One preferred embodiment of the invention refers to a baler-wrapper combination with such a bale forming system and a bale wrapping apparatus as well as to a method for forming and wrapping a bale from loose material, in particular a round-cylindrical bale from loose agricultural crop material. Such a combination forms under pressure a bale in a bale forming chamber, ejects the bale, and wraps the entire surface of the ejected bale outside of the bale forming chamber into wrapping material, preferably plastic film. While the bale is wrapped, it is carried on a bale supporting device positioned outside of the bale forming chamber. In order to wrap the bale, the formed and ejected bale has to be transferred from the bale forming chamber onto the bale supporting device.

The invention can also be used for a bale forming system with a bale forming device and a so-called bale accumulator which carries at least one ejected bale to a suitable depositing location.

### BACKGROUND OF THE INVENTION

Several proposals how to transfer a formed bale from the bale forming chamber onto the bale supporting device of a bale wrapping apparatus have been made.

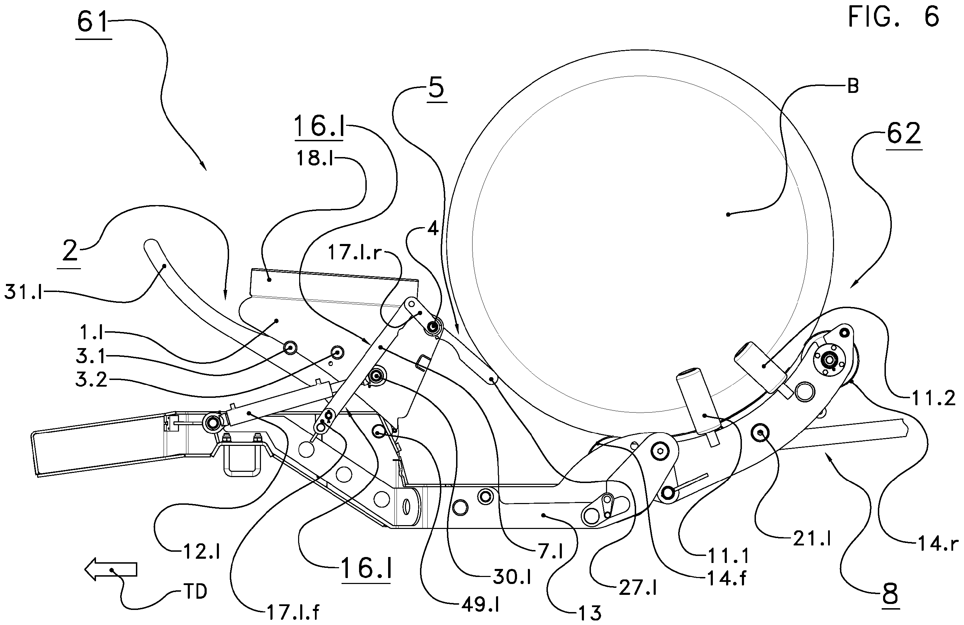

EP 0983720 B1 discloses an agricultural vehicle comprising a round baler (Rundballenpresse 1) and a wrapping device (Wickelvorrichtung 11). A frame (Tragrahmen 4) of a chassis (Fahrwerk 5) carries the round baler 1 and the wrapping device 11. A bale to be wrapped is moved from the round baler 1 onto a wrapping table (Wickeltisch 21) of the wrapping device 11. A chain drive 22 rotates several traversal rods which in turn rotates the bale being on the wrapping table 21. A cantilever arm (Auslegearm 16) carries two film dispensers (Folienspender 18, 19). The bale to be wrapped is moved from the round baler 1 onto the wrapping table 21 by means of a receiving fork (Auffanggabel 28) comprising lateral guiding rods (seitliche Führungsstange 29). This receiving fork 28 can be rotated around a horizontal axis 30 perpendicular to the travelling direction, cf. Fig. 6.

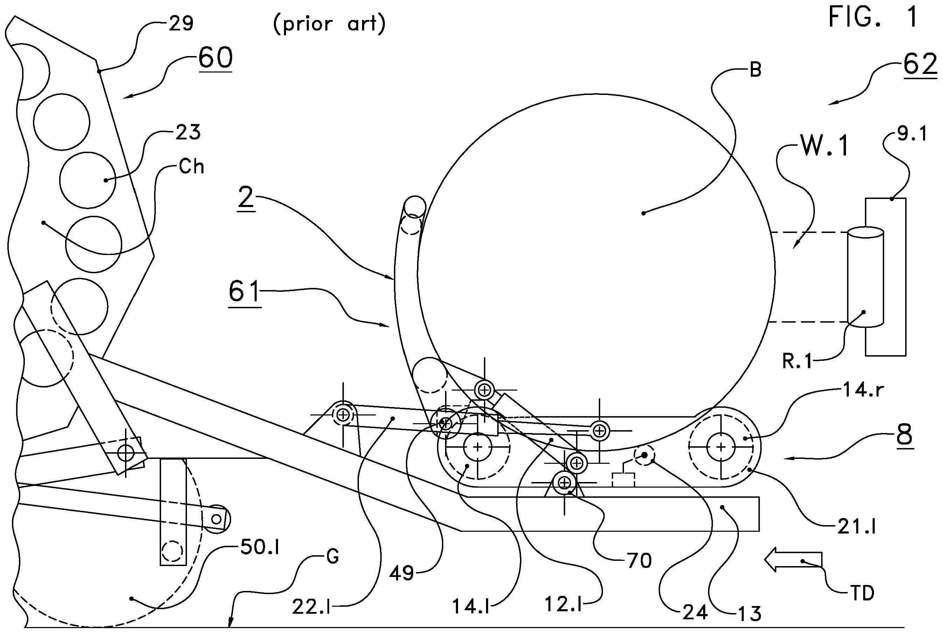

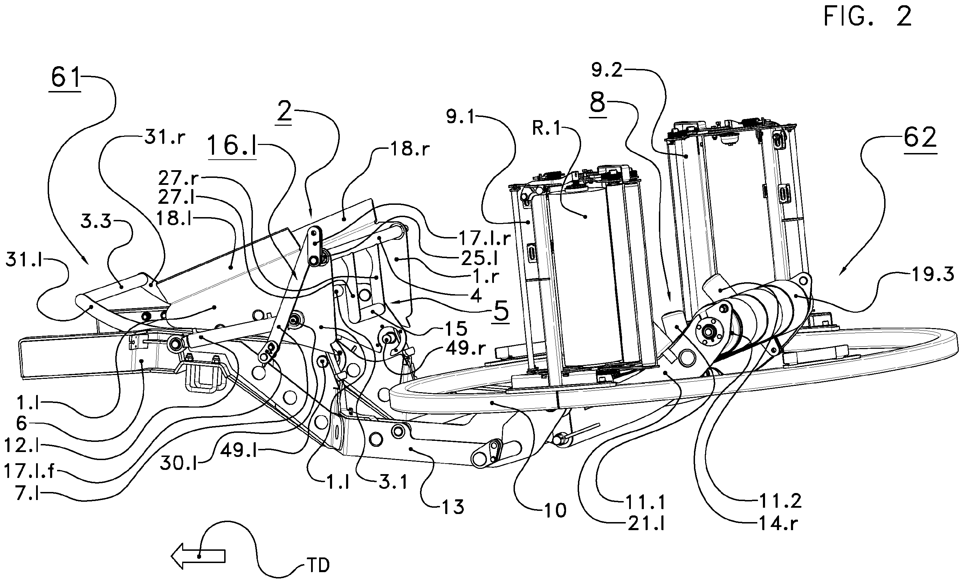

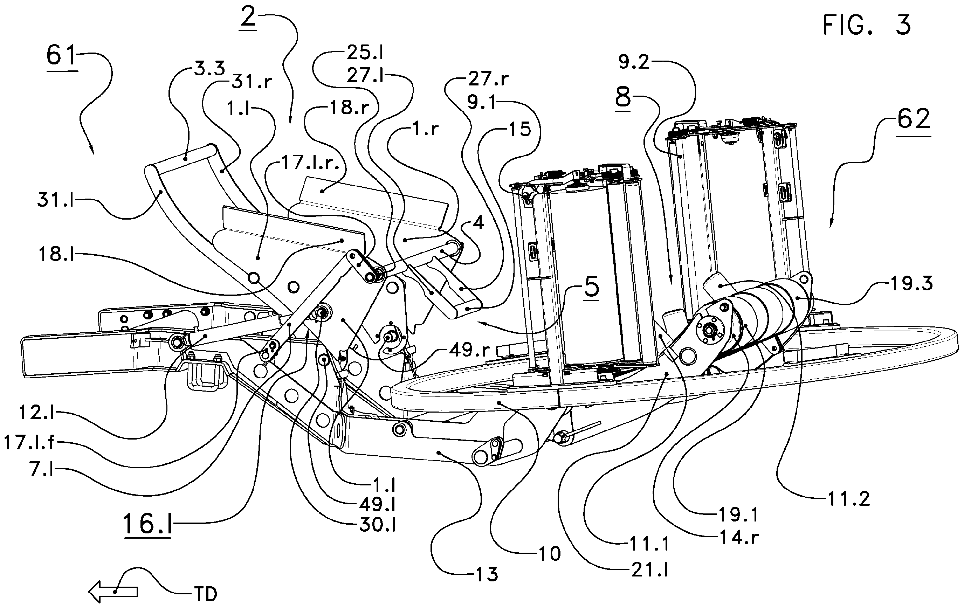

EP 1726204 B1 discloses a baler-wrapper combination (Press-Wickel-Kombination 1) with a round baler (Rundballenpresse 2) and a bale wrapper (Ballenwickeleinrichtung 3). A round bale 13 is formed in the pressing chamber of the round baler 2. After the bale 13 is finished, the tailgate 12 of the baler 2 is opened and the bale 13 drops onto a transfer table (Übergabetisch 7), cf. Fig. 1 and Fig. 2. A transfer bracket (Übergabebügel 9) is pivoted upwards from a parking position (Grundstellung S1) into a raised position S2, cf. Fig. 2 and Fig. 3. A hydraulic cylinder 15 causes the movement of the transfer bracket 9. The transfer bracket 9 comprises an idler roller 16 mounted at a traversal bar. The upward movement of the transfer bracket 9 causes the idler roller 16 to touch the bale's circumferential surface and to move the bale 13 from the transfer table 7 onto the wrapping table (Wickeltisch 17). Afterwards the transfer bracket 9 is moved into an intermediate position S3, cf. Fig. 3. In this position S3 the transfer bracket 9 prevents the undesired event that the bale 13 on the wrapping table 17 rolls backwards towards the transfer table 7. In an alternative embodiment the transfer bracket 9 comprises several pivoting arms (Schwenkarme 26) which can be folded together.

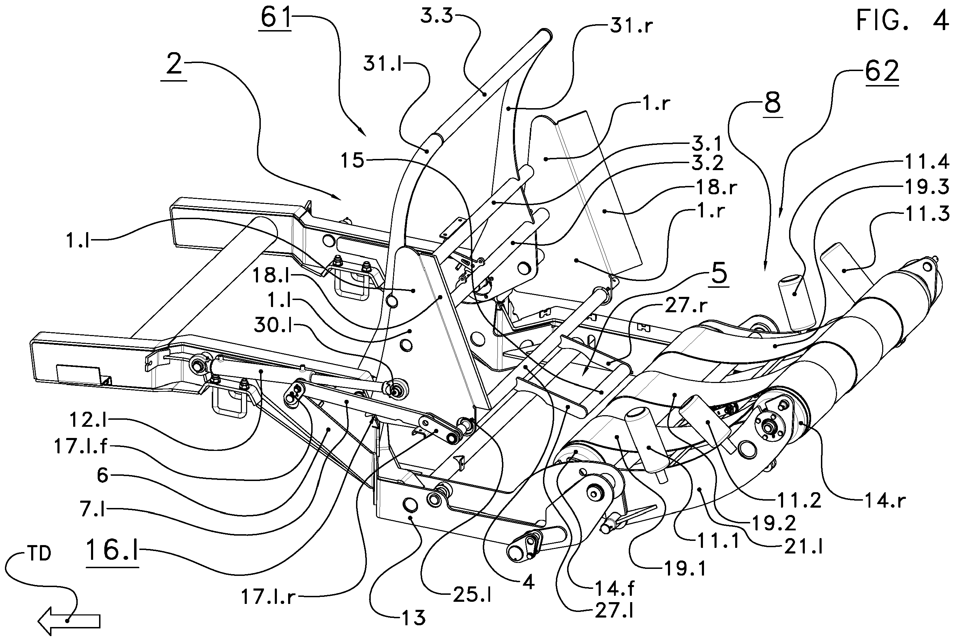

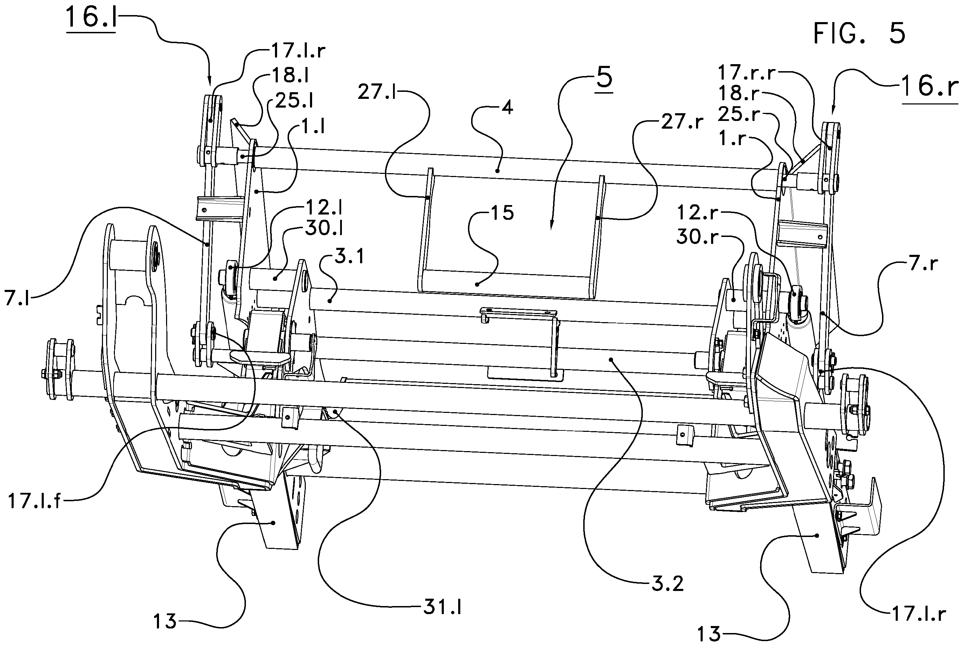

Fig. 1 of EP 1266563 B1 shows a combination comprising a round baler 1 and a wrapper 3. A wrapping table 13 of the wrapper 3 may be tilted forwards and backwards around a horizontal axis 12 perpendicular to the travelling direction TD. A round bale 9 is transferred from the round baler 1 to the wrapper 3 by means of two chute devices 20, 21, cf. Fig. 1, Fig. 3, and Fig. 4. The first chute device 20 comprises two parallel ramps 26, cf. Fig. 2. The second chute device 21 comprises a bracket (stirrup) 46 with two longitudinal curved struts 47, cf. Fig. 3 and Fig. 4. An ejected bale 9 drops out of the pressing chamber onto the first chute device 20 and rolls over the ramps 26 onto the stirrup 46 of the second chute device 21, cf. Fig. 4. The stirrup 46 is pivoted and lifts the bale 9 on the wrapping table 13, cf. Fig. 5.

WO 9014756 A1 discloses a combination comprising a tractor 12, a baler 11, and a wrapper 10, cf. Fig. 1. A turntable 16 is mounted on the main frame 13 of the wrapper 10 and rotates a bale to be wrapped, cf. Fig. 2. A round bale is transferred as follows from the baler 11 onto the main frame 13 of the wrapper 10: A discharged round bale drops onto a guide 22 and rolls away from the baler 11. A mechanism 23 grips the bale, raises the bale and transfers the bale rearward. The bale falls under gravity onto the turntable 16. This gripping mechanism 23 comprises a cradle with a base 25 and a pair of pivotal gripper arms 26, cf. Fig. 1. In order to grip a bale, the gripper arms 26 can rotate around vertical pivot axes 27. The cradle 25 can be pivoted around a horizontal pivot axis 28, cf. Fig. 2.

Fig. 1 to Fig. 3 of EP 0543145 B1 show a wrapper for round bales (Rundballenwickelgerät 1) which can be connected with a baler (Presse 21). A wrapping table (Wickeltisch 31) with two driven rollers 41 rotates a round bale 20 to be wrapped. A loading device in the form of a bale loading bracket (Ballenladebügel) 11 can be pivoted around a horizontal axis 12, cf. Fig. 1 and Fig. 2. A hydraulic actuator (Hydrobeweger 13) can pivot the bracket 11 upwardly, cf. Fig. 1 and Fig. 5. A round bale 20 which is ejected out of the pressing chamber rolls onto the bracket 11 which is lowered down. The actuator 13 lifts the bracket 11 with the bale 20 in the direction of the arrow 37, cf. Fig. 5. The round bale is moved against the rollers 41 of the tilted wrapping table 31. Afterwards the wrapping table 31 is pivoted back into a horizontal position. By the movement of the wrapping table 31 and the further pivoting of the bracket 11 the round bale 20 is pivoted into a wrapping position 42, cf. Fig. 6. Later the wrapping table 31 is pivoted backwards and the wrapped bale drops onto a tilting unit, cf. Fig. 7.

US 2004/0103632 discloses a bale unloading arrangement according to the precharacterising portion of claim 1.

### SUMMARY OF THE INVENTION

A problem solved by the invention is to provide a bale forming system with the features of the preamble of claim 1 and a bale forming method with the features of the preamble of claim 23 wherein the risk that an ejected bale is not properly transferred away from the bale forming apparatus is reduced.

This problem is solved by a bale forming system with the features of claim 1 and by a bale forming method with the features of claim 23. Preferred embodiments are specified in the depending claims.

The bale forming system according to the invention comprises
- a bale forming apparatus providing a bale forming chamber and
- a bale transfer unit.

The bale forming apparatus can form a bale in the bale forming chamber and can eject it out of the bale forming chamber. The bale transfer unit is positioned outside of the bale forming chamber and comprises
- a bale carrier,
- a bale pusher,
- a bale transfer actuator, and
- a mechanical coupling device.

The bale carrier can carry a bale formed in the bale forming chamber and can be moved with respect to the bale forming apparatus between
- a bale receiving position and
- a bale depositing position.

The bale pusher can be moved with respect to the bale carrier
- from a parking position
- into a working position.

When the bale pusher is in the working position, the bale pusher is positioned between the bale forming apparatus and a bale wherein the bale has been moved away from the bale forming apparatus and has left the bale carrier being in the bale depositing position.

The mechanical coupling device couples
- a movement of the bale carrier from the bale receiving position into the bale depositing position with
- a movement of the bale pusher from the parking position into the working position.

The bale forming method is performed by using such a bale forming system. The bale forming system is operated as follows and the method according to the invention comprises the following steps:
- The bale forming apparatus forms a bale in the provided bale forming chamber.
- The bale forming apparatus ejects the formed bale out of the bale forming chamber.
- The ejected bale moves onto the bale carrier being in the bale receiving position.
- The bale transfer actuator moves the bale carrier carrying the ejected bale from the bale receiving position away from the bale forming apparatus into the bale depositing position.
- Thanks to the mechanical coupling device this movement of the bale carrier causes the bale pusher to be moved with respect to the bale carrier from the parking position into the working position.
- The bale moves from the bale carrier being in the bale depositing position in a direction away from the bale forming apparatus.
- After the bale carrier is moved into the bale depositing position, the bale pusher being in the working position prevents the bale from moving back towards the bale forming apparatus.

### ADVANTAGES

According to the invention the bale carrier carrying a bale can be moved from the bale receiving position into the bale depositing position. The movement of the bale carrier causes the bale to be moved away from the bale forming apparatus. The bale carrier being in the bale depositing position causes the carried bale to move from the bale carrier and in a direction away from the bale forming apparatus. Thereby the bale carrier helps to move a formed and ejected bale to a depositing position at which the bale can be deposited on the ground or on a further device wherein the bale carrier is positioned between the bale forming apparatus and the depositing position. Thanks to the bale carrier the depositing position has a larger distance to the bale forming apparatus compared with a bale forming system which does not comprise a movable bale carrier.

In general the bale forming apparatus comprises a movable discharge gate which can be moved between a closed position and at least one opened position. The depositing position has a larger distance to the bale forming apparatus and in particular to the discharge gate compared with the dropping position onto which the bale drops after being ejected out of the bale forming chamber. The invention makes it possible to construct and position the bale carrier such that the discharge gate can be closed again, i.e. moved into the closed position, when the bale carrier has moved the bale away from the dropping position. This bale movement is performed by the bale transfer actuator which moves the bale carrier into the depositing position. When the bale carrier has reached the bale depositing position - perhaps even earlier - the discharge gate can be closed again. Thanks to the movable bale carrier it is possible but not necessary to move the bale forming system away from the bale depositing position for closing the discharge gate.

The bale carrier being in the bale depositing position can prevent the bale from moving back towards the bale forming apparatus. Such a movement is undesired as the moved bale may inhibit the bale forming apparatus from closing the discharge gate or may hit the discharge gate.

Thanks to the bale transfer actuator the bale carrier and thereby the bale on the bale carrier are actively moved away from the bale forming apparatus. This is in particular of advantage if the bale forming system is a part of a vehicle which can operate in a hilly environment. Seen in the travelling direction of the vehicle the bale carrier being in the bale receiving position is preferably positioned behind and angularly below the bale forming apparatus. It may happen that the vehicle with the bale forming system has a descending inclination and the bale is ejected and/or moved in an upward direction. When being moved into the bale depositing position, the bale carrier carrying the bale is moved upwards against the force of gravity. Without such an actively moved bale carrier the ejected bale may not move away from the bale forming apparatus. The bale carrier being in the bale depositing position prevents the ejected bale from moving downwards back towards the bale forming apparatus.

In general the bale carrier being in the bale receiving position is positioned angularly or vertically below the movable discharge gate being in the or one opened position. Thereby a bale can drop out of the bale forming chamber onto the bale carrier. It is possible but not necessary to provide an actuator which actively ejects the formed bale out of the chamber. In contrast the force of gravity moves the bale onto the bale carrier.

The invention makes it possible to position the bale pusher such that the movement of the bale pusher helps to move the ejected bale away from the bale forming apparatus. In addition the bale pusher being in the working position prevents the bale from moving back towards the bale forming apparatus and/or onto the bale carrier.

When the bale carrier is moved into the bale depositing position, the bale pusher is moved with respect to the bale carrier from the parking position into the working position. This movement increases the effect of the bale pusher - compared with a bale pusher which only moves together with the bale carrier and keeps its position with respect to the bale carrier. The position of the bale pusher being in the working position further reduces the risk that the bale moves back towards the bale forming apparatus. In addition it is possible to implement the bale forming system such that the bale forming system with the bale carrier being in the bale receiving position and the bale pusher being in the parking position has a shorter distance compared with a bale pusher which cannot move with respect to the bale carrier.

According to the invention the bale pusher is moved with respect to the moved bale carrier when the bale carrier is moved into the bale depositing position. Thanks to the mechanical coupling device no further actuator particularly for moving the bale pusher is required. In contrast the bale transfer actuator moves the bale carrier into the bale depositing position and - via the mechanical coupling device - additionally the bale pusher into the working position. Operating the coupling device does not require any electric energy or hydraulic or pneumatic fluid and therefore no connectors for energy or fluid supply. In addition the coupling device can be implemented as a purely passive part which does not require a monitoring or adjustment device. Thanks to the coupling device both movements - that of the bale carrier and that of the bale pusher - are automatically synchronized. The bale pusher reaches the working position at the proper time. In addition the bale transfer actuator needs not to be directly connected with the bale pusher.

The bale pusher is moved into the working position by a superposition of the following two movements relative to the bale forming apparatus:
- the movement of the bale carrier away from the bale forming device (caused by the bale transfer actuator) and
- the movement of the bale pusher with respect to the bale carrier (enforced by the coupling device).

Therefore the invention provides several degrees of freedom for adapting the bale forming system to given spatial, operational, and further constraints wherein several design decisions can be made when designing the bale forming system according to the invention, in particular the following ones:
- the position of the bale carrier with respect to the bale forming chamber,
- the position of the bale pusher with respect to the bale carrier,
- the position of the coupling device with respect to the bale pusher and with respect to the bale forming apparatus,
- if the bale carrier is pivotal, the position of the carrier's pivoting axis or the carrier's moving direction,
- if the bale pusher is pivotal, the position of the pusher's pivoting axis or the pusher's moving direction,
- the range of possible carrier movement,
- the range of possible pusher movement,
- the dimensions of the bale carrier,
- the dimensions of the coupling device,
- the dimensions of the bale pusher, and
- in the case of a bale supporting device (see below) the position of the bale carrier with respect to the bale supporting device.

Thanks to the invention the bale forming system can more easily be adapted to different constraints, in particular to the dimensions and the weight of a bale to be formed and deposited.

### PREFERED EMBODIMENTS

Preferably the bale pusher is positioned and arranged as follows: Moving the bale pusher from the parking position into the working position increases the distance between
- the bale pusher and
- the bale forming apparatus and therefore the bale forming chamber.

When being moved into the working position, the bale pusher is moved away from the bale forming apparatus. Thanks to this embodiment it is possible that the bale pusher touches the bale on the bale carrier and moves the bale away from the bale forming apparatus while the bale carrier with the bale is moved into the bale depositing position. This embodiment increases the reliability in particular if the bale on the bale carrier is moved in an ascending direction away from the bale forming apparatus. In addition the bale pusher being in the parking position can be positioned such that it does not form an obstacle against the movement of the bale onto the bale carrier and against the movement of the bale carrier.

It is also possible that the bale pusher being in the parking position is in a remote, e.g. lowered or raised, position and the bale pusher is only positioned between the bale and the bale forming apparatus when the bale pusher is in the working position. It is possible that the distance between the bale pusher and the bale forming apparatus remains substantially constant while the bale pusher is moved from one position into the other position.

In one embodiment the bale carrier is rotated with respect to the bale forming apparatus around a carrier rotating axis when being moved into the bale depositing position. The bale pusher is rotated with respect to the bale carrier around a pusher rotating axis when being moved into the working position. The movement of the bale pusher with respect to the bale forming apparatus is a superposition of two rotational movements. Preferably these two rotating axes are parallel to each other. This embodiment enables constructing a bale transfer unit with a relatively small length wherein the length is the maximal dimension in a direction perpendicular to the parallel axes and in the case of a vehicle the dimension parallel to the travelling direction. The mechanical coupling device can be implemented in an easy way. If the bale forming system is implemented on board of a vehicle, the rotating axes are preferably perpendicular to the travelling direction.

In one implementation the bale carrier is rotated or otherwise pivoted in one direction away from the bale forming apparatus when being moved into the bale depositing position. The bale pusher is rotated or otherwise pivoted with respect to the bale carrier in the opposite direction away from the bale forming apparatus when performing the enforced movement into the working position.

According to the invention the mechanical coupling device couples the movement of the bale carrier with a movement of the bale pusher. Preferably the mechanical coupling device is mechanically connected with the bale forming apparatus or with a frame carrying the bale forming apparatus. In addition the bale pusher is connected with the bale carrier, preferably is rotatably coupled. The mechanical coupling device is further coupled with the bale pusher but preferably not with the bale carrier. As the coupling device is not coupled with the bale pusher, the mechanical coupling device can move with respect to the bale carrier and does not form an obstacle against the movement of the bale carrier.

Preferably the coupling device comprises two parts. The bale carrier is positioned in the space between these coupling device parts. Preferably a distance between a coupling device part and the bale carrier occurs. In the case of a vehicle this distance is perpendicular to the travelling direction.

In a preferred embodiment the bale carrier is positioned substantially between the bale forming apparatus and the entire bale pusher or a major part of it - at least when the bale carrier is in the bale depositing position. Thanks to this embodiment the bale pusher even better helps to move the bale away from the bale forming apparatus and prevents an undesired movement of the bale having left the bale carrier back towards the bale forming apparatus.

In one embodiment the bale pusher is mechanically mounted at the bale carrier and can rotate with respect to the bale carrier. Thanks to the connection the movement of the bale carrier enforces a movement of the bale pusher together with the bale carrier. The mechanical coupling device enforces a rotation of the moved bale pusher with respect to the bale carrier. Preferably the pushing element is positioned between the bale forming apparatus and the bale at least when the bale pusher is in the working position. This embodiment yields a very easy and stable mechanical construction.

In one implementation the bale pusher comprises a traversal bale pusher rod and a pushing element. The bale pusher rod is rotatably mounted at the bale carrier. The pushing element is rigidly mounted at the bale carrier rod. This implementation achieves a very stable and easy mechanical construction.

Preferably a distance between the pushing element and the bale pusher rod occurs. In one implementation the pushing element is implemented as a bracket which is mounted at the bale pusher rod. The bracket comprises an idler roller which contacts at least temporarily a bale while the bale is transferred away from the bale forming apparatus. Thanks to the idler roller only little friction between the bale pusher and the transferred bale occurs. In an alternative implementation a mechanical transmission element transfers the movement of the bale pusher into the working position onto the roller mounted at the bracket such that the roller at the bracket is rotated. It is also possible that the bracket comprises a bracket rod which touches the bale and has preferably a smooth surface. Preferably the bracket points away from the bale forming apparatus at least when the bale pusher is in the working position.

Preferably the bale carrier being in the bale receiving position is positioned at least partially below the bale forming chamber. Therefore the formed bale can move onto the bale carrier thanks to the force of gravity. This embodiment achieves a shorter bale forming system compared with an apparatus in which the bale must be moved horizontally or angularly towards the bale carrier. It is not necessary to provide an ejecting actuator which actively pushes or otherwise ejects the bale out of the bale forming chamber.

In one embodiment a bale presence sensor automatically detects the event that an ejected bale has moved onto the bale carrier being in the bale receiving position. This detection triggers the event that the bale transfer actuator moves the bale carrier carrying the bale into the bale depositing position. This embodiment ensures that the bale carrier is moved as early as possible but not too early - even if the ejected bale reaches the bale carrier later or earlier than scheduled. It is possible that an alert is generated if the sensor does not detect a bale on the bale carrier after the bale should have been ejected out of the bale forming chamber and preferably after a given timespan has passed. This alert shows that the bale has not been properly ejected out of the bale forming chamber. Thanks to the bale presence sensor the bale carrier with the bale and the bale pusher are moved as early as possible into the working position.

In one implementation of this embodiment the bale presence sensor - or a further sensor - also detects the event that the bale has left the bale carrier being in the bale depositing position. This detection triggers the event that the bale carrier is moved back into the bale receiving position or into an intermediate position. Thanks to the coupling device the bale pusher is simultaneously moved into the parking position or into an intermediate position. It is possible that an alert is generated if the sensor still detects a bale on the bale carrier after the bale should have been moved away from the bale carrier.

In one embodiment the bale forming system further comprises a bale supporting device outside of the bale forming chamber. This bale supporting device can carry a bale which has been ejected out of the bale forming chamber. The bale carrier is preferably positioned between the bale forming apparatus and the bale supporting device. The ejected bale moves from the bale carrier being in the bale depositing position onto the bale supporting device. The bale pusher being in the working position prevents the bale from rolling or gliding from the bale supporting device back onto the bale carrier.

In one embodiment the bale pusher is moved away from the bale forming apparatus and can touch a bale on the bale carrier from angularly below or from the side when the movement of the bale carrier causes the bale pusher to be moved into the working position. Thereby the moved bale pusher lifts and/or pushes and thereby moves the bale away from the bale forming apparatus and in the embodiment with the bale supporting device onto the bale supporting device. This embodiment further reduces the risk that the bale is not properly moved onto the bale supporting device or otherwise away from the bale forming apparatus. The embodiment is in particular of advantage if the bale forming chamber has the shape of a drum and the bale is a round-cylindrical object.

In one embodiment the bale pusher being moved into the working position further guides the bale away from the bale forming apparatus.

According to one implementation of this embodiment the bale pusher can rotate with respect to the bale carrier. The movement of the bale carrier causes an enforced rotation of the bale pusher with respect to the bale carrier. One end of the bale pusher points away from the bale forming apparatus, e.g. towards the bale supporting device. This bale pusher end is moved upwards and can lift and push a bale onto the bale supporting device.

In one application the bale supporting device can be moved with respect to the bale forming apparatus between a bale receiving position and at least one further position. The ejected bale moves from the bale carrier being in the bale depositing position onto the bale supporting device being in the bale receiving position. Later the bale supporting device carrying the bale is moved into the or one further position. The bale carrier can be moved away from the bale supporting device back into the bale receiving position.

In one implementation the bale forming system belongs to a vehicle. The vehicle moves the bale carried on the bale supporting device to a suitable location where the bale can be deposited on the ground, i.e. without causing danger and without being damaged. In the case of a round-cylindrical bale the depositing location must have a sufficiently low inclination such that the bale does not roll downwards.

In one implementation the bale supporting device can carry simultaneously several bales (bale accumulator). A bale moves from the bale carrier being in the bale depositing position onto a receiving position on the bale supporting device. A shifting device moves the bale away from this receiving position such that the bale supporting device can receive a further bale on the receiving position and the shifted bale remains on the bale supporting device. Later a further bale can move from the bale carrier onto the bale supporting device and there on the receiving position. Thanks to the bale supporting device it is possible to deposit several bales carried on the bale supporting device at the same suitable location on the ground in a cluster.

In one application the bale supporting device belongs to a bale wrapping apparatus. This bale wrapping apparatus can wrap a bale carried on the bale supporting device into at least one web of wrapping material, e.g. into two plastic films. The bale forming apparatus, the bale transfer unit, and the bale wrapping apparatus together form a so-called baler-wrapper combination which forms and wraps a bale.

In the application with the bale wrapping apparatus the bale pusher being in the working position prevents a bale which is carried on the supporting device and which is wrapped from rolling or gliding from the bale supporting device in a direction towards the bale forming apparatus.

In one implementation of the embodiment with the bale supporting device the bale carrier remains in the bale depositing position while the bale on the bale supporting device is transported over ground and/or is wrapped - or remains in the bale depositing position at least in the beginning of wrapping the bale. The bale pusher being kept in the working position prevents the bale from moving back from the bale supporting device onto the bale carrier.

In a further implementation of this embodiment the bale carrier is moved back into the bale receiving position or into an intermediate position after the bale has been moved onto the bale supporting device and - if the bale supporting device belongs to a bale wrapping apparatus - before or while the bale on the bale supporting device is wrapped. Thanks to the mechanical coupling device the back movement of the bale carrier causes the bale pusher to be moved back into the parking position or into an intermediate position. In this intermediate position the bale pusher prevents the bale from moving back. Preferably the bale carrier and the bale pusher are moved back after the bale supporting device carrying the bale is moved from the bale receiving position into the or one further position.

In one preferred implementation of the bale wrapping apparatus the bale on the bale supporting device is moved with respect to at least one reservoir holder which keeps a reservoir of wrapping material. Thanks to this movement at least one surface of the bale on the bale supporting device is wrapped. In one implementation the bale on the bale supporting device is rotated with respect to the bale supporting device, e.g. around the bale's center axis. In addition the reservoir holder is rotated with respect to the bale supporting device and thereby with respect to the bale on the bale supporting device. Thereby the relative movement of the bale with respect to the reservoir is a superposition of the bale rotation and the reservoir rotation. Thanks to this superposition the entire bale surface is wrapped while the bale is on the bale supporting device.

In one implementation the reservoir holder and thereby the reservoir is rotated around the bale supporting device. In a further implementation the bale supporting device carrying the bale is rotated and the reservoir holder can be a stationary device.

Preferably the wrapped bale is deposited on the ground after being wrapped. In one implementation an actuator tilts the bale supporting device and the wrapped bale rolls or glides from the tilted bale supporting device onto the ground. It is possible that the bale supporting device can be pivoted with respect to the bale forming apparatus between a bale receiving position, a bale wrapping position, and a bale deposition position.

In one implementation the bale supporting device is tilted and the bale is deposited in a direction away from the bale forming apparatus, i.e. in the same direction in which the bale carrier moves the bale onto the bale supporting device. If the bale supporting device belongs to a baler-wrapper combination and if the baler-wrapper combination is a part of a vehicle which is moved over ground in a travelling direction, the depositing direction is opposite to the travelling direction. In a further implementation the bale supporting device is tilted in a direction which is perpendicular or angular to the direction in which the bale carrier moves the bale. In the case of a vehicle this tilting direction is perpendicular to the travelling direction.

In one application the bale forming chamber has the shape of a drum and the bale to be wrapped is a round-cylindrical bale. Preferably the circumferential surface of the bale in the bale forming chamber is wrapped into a web of wrapping material before the bale is ejected. The circumferential surface of this bale rests on the bale supporting device. Preferably the bale supporting device rotates the bale. After being deposited the ejected bale is tilted onto one front face such that the risk is reduced that the deposited bale rolls away. It is also possible that the bale forming chamber has the form of a cuboid or tapering channel and the bale which is ejected is a cuboid bale.

In one embodiment the bale carrier being in the bale depositing position guides and deposits the bale directly on the ground. In a further embodiment the bale carrier being in the bale depositing position moves and/or guides the bale onto a bale supporting device. This bale supporting device receives and carries the bale and deposits the carried bale onto the ground. The bale carrier moves the ejected bale towards the bale supporting device.

The bale carrier bridges at least partially the distance between the bale forming chamber and the bale supporting device. Therefore the bale supporting device can be positioned in a distance to the bale forming apparatus such that a discharge gate of the bale forming apparatus can be opened and closed without a collision with a part of the bale wrapping apparatus, in particular without colliding with a rotated wrapping material reservoir. Thanks to the bale carrier and the bale transfer actuator it is not necessary to move the bale supporting device linearly with respect to the bale forming apparatus. In one embodiment the bale pusher being in the working position bridges the gap between the bale carrier and the bale supporting device.

Preferably the bale is transferred onto the bale supporting device not only by the movement of the bale carrier but additionally by the synchronized enforced movement of the bale pusher. The movement of the bale pusher from the parking position into the working position helps to transfer the ejected bale onto the bale supporting device. It is possible that the bale pusher touches the bale's circumferential surface and moves the bale from the bale carrier while and/or after the bale carrier and thereby the bale pusher is moved towards the bale supporting device. In particular the bale pusher reduces the risk of the undesired event that the bale to be transported and/or wrapped moves from the bale supporting device back onto the bale carrier. This event can in particular occur if the bale supporting device is positioned angularly above the bale carrier, e.g. due to an inclination of the baler-wrapper combination in a hilly environment.

In one embodiment mentioned above the bale forming system according to the invention belongs to a baler-wrapper combination. This baler-wrapper combination further comprises a bale wrapping apparatus with a bale supporting device. The bale supporting device can carry a bale to be wrapped. The bale wrapping apparatus can wrap a bale carried on the bale supporting device.

The baler-wrapper combination is operated as follows and a bale forming and wrapping method using the combination according to this embodiment comprises the following further steps - additionally to that of the bale forming method according to the invention:
The bale moves from the bale carrier being in the bale depositing position onto the bale supporting device.
The movement of the bale carrier
- from the bale receiving position
- away from the bale forming apparatus and thereby towards the bale supporting device
- into the bale depositing position
   causes the bale pusher to be moved with respect to the bale carrier
- from the parking position
- into the working position.
Thanks to this movement the distance between the bale pusher and the bale supporting device is preferably decreased.
The bale wrapping apparatus wraps the bale carried on the bale supporting device.

These and other aspects of the invention and of the preferred embodiment will be even more apparent from the detailed embodiment as described below and will be elucidated in detail there.

### BRIEF DESCRIPTION OF THE DRAWINGS

Fig. 1 shows a baler-wrapper combination according to the prior art with a bale carrier neither comprising guiding sheets nor a bale pusher;
Fig. 2 shows the bale transfer unit according to the embodiment of the invention with the bale carrier being in the bale receiving position, the bale pusher being in the parking position, and a part of the bale wrapping apparatus wherein the bale is omitted in the figure;
Fig. 3 shows the assembly of Fig. 2 with the bale carrier being in an intermediate position between the bale receiving position and the bale depositing position and the bale pusher also being in an intermediate position;
Fig. 4 shows the assembly of Fig. 2 with the bale carrier being in the bale depositing position and the bale pusher being in the working position;
Fig. 5 shows the assembly of Fig. 2 in a view from the rear side;
Fig. 6 shows in a side view the assembly of Fig. 2 with the bale being transferred onto the wrapping table and the bale carrier and the bale pusher being in an intermediate position.

### DETAILED DESCRIPTION OF EMBODIMENT

In the embodiment the invention is used on board of a baler-wrapper combination which belongs to an agricultural vehicle and which subsequently forms and wraps round-cylindrical bales from loose crop material. Fig. 1 shows the rear part of a baler-wrapper combination according to the prior art. Fig. 2 to Fig. 6 show a baler-wrapper combination according to a preferred embodiment of the invention. Coinciding parts have the same reference signs. For sake of clarity the bale is shown in Fig. 1 and Fig. 6 but is omitted in Fig. 2 to Fig. 5.

The baler-wrapper combination according to Fig. 1 to Fig. 6 is pulled over ground in a travelling direction TD (in Fig. 1 to Fig. 4 from right to left) by a propelled vehicle (not shown). The combination comprises
- a bale forming apparatus 60 (only shown partly in Fig. 1),
- a bale transfer unit 61 with a bale carrier 2, and
- a bale wrapping apparatus 62.

The baler-wrapper combination is carried on a chassis with two ground-engaging wheels 50.1, 50.r. The bale forming apparatus 60 and the bale transfer unit 61 belong to a bale forming system according to the invention.

The bale forming apparatus 60 of the embodiment is a conventional round baler and comprises
- a pick-up unit (not shown),
- a feeding channel (not shown),
- a bale forming device providing a drum-shaped bale forming chamber Ch of fixed or variable size,
- a casing for the bale forming chamber Ch with a stationary front housing (not shown) and a pivotal discharge gate (tailgate) 29 (partly shown in Fig. 1), and
- a net or twine wrapping apparatus (not shown) mounted at the front housing.

The bale forming device comprises several pressing rollers and in one embodiment at least one pressing belt. Fig. 1 shows the rear part of the discharge gate 29 of the round baler 60 with several pressing rollers 23. The discharge gate 29 can be moved between a closed position (shown in Fig. 1) and at least one opened position. While the bale forming device forms a bale B in the bale forming chamber Ch and while it wraps in the bale forming chamber Ch the circumferential surface of the bale B, the discharge gate 29 is in the closed position. For ejecting the bale B out of the bale forming chamber Ch the discharge gate 29 is opened, i.e. moved into the or one opened position. In the embodiment a discharge gate actuator (not shown) can open the discharge gate 29 against the force of gravity.

In one embodiment (not shown) the bale forming apparatus 60 can subsequently form bales with different diameters and can open the discharge gate 29 in an opened position which depends on the diameter of the bale currently to be ejected. The bale transfer unit 61 of Fig. 1 to Fig. 6 comprises
- a bale carrier 2 and
- a hydraulic bale transfer actuator with a left piston-cylinder device 12.1 and a corresponding right piston-cylinder device 12.r.

The terms "left" and "right" refer to the travelling direction TD. The terms "horizontal" and "vertical" as well as "upper" and "lower" refer to a horizontal ground G on which the baler-wrapper combination stands.

The bale transfer unit 61 according to the embodiment of the invention further comprises
- a bale pusher 4, 5, and
- a mechanical coupling device 16.1, 16.r.

The bale pusher 4, 5 and the coupling device 16.1, 16.r are novel and are explained below with respect to Fig. 2 to Fig. 6.

The bale carrier 2 according to the embodiment comprises
- a bale support frame with a left frame part 31.l and a right frame part 31.r,
- three traversal bale support rods 3.1, 3.2, 3.3,
- left and right guiding sheets 1.l, 1.r with angled upper segments 18.1, 18.r, and
- left and right carrier axles 49.l, 49.r defining the carrier rotating axis 49.

The bale support rods 3.1, 3.2, 3.3 are positioned between the bale support frame parts 31.l and 31.r and are rigidly rotatably connected with both frame parts 31.l, 31.r. The guiding sheets 1.1 and 1.r are rigidly connected with the bale support rods 3.1, 3.2. The bale support rods 3.1, 3.2, 3.3 form the bottom of a cradle, i.e. they are positioned such that a bale B on the bale carrier 2 having an average diameter touches simultaneously all three bale support rods 3.1, 3.2, 3.3.

The bale support frame 31.l, 31.r and the bale support rods 3.1, 3.2, 3.3 together form a bale carrier bottom for carrying and supporting a bale. The bale carrier 2 comprises this bale carrier bottom 31.l, 31.r, 3.1, 3.2, 3.3 and the guiding sheets 1.l, 1.r. The bale carrier 2 can carry a round-cylindrical bale B on the bale carrier bottom 31.1, 31.r, 3.1, 3.2, 3.3 in a position between the guiding sheets 1.l and 1.r. The center axis of the bale B is parallel to the bale support rods 3.1, 3.2, 3.3 and perpendicular to the bale support frame 31.l, 31.r and to the travelling direction TD. The distance between the guiding sheets 1.l and 1.r is slightly larger than the distance between the two front faces of the round-cylindrical bale B.

The bale wrapping apparatus 62 of the embodiment is a conventional wrapper for round-cylindrical bales and comprises
- a pivotal wrapping table 8,
- a wrapping apparatus frame 13 for carrying the wrapping table 8,
- a hydraulic wrapping table actuator 22.l, 22.r for pivoting the wrapping table 8 with respect to the wrapping apparatus frame 13 around the horizontal wrapping table pivoting axis 70,
- a wrapping ring 10 which can rotate with respect to the wrapping table 8 and with respect to the wrapping apparatus frame 13,
- a wrapping ring drive (not shown) for rotating the wrapping ring 10 with respect to the wrapping table 8,
- two reservoir holders 9.1, 9.2 which are mounted at the wrapping ring 10 and which rotatably hold two wrapping material reservoirs (film rollers) R.1, R.2,
- optionally a path or velocity sensor 24 which measures the length of the movement path or the circumferential velocity of the bale B on the wrapping table 8, and
- a web clamping and severing device (not shown).

The wrapping apparatus frame 13 is connected with a frame 6 for the bale forming apparatus 60. The wrapping table 8 serves as the bale supporting device and comprises
- a wrapping table frame with left and right table frame parts 21.l, 21.r,
- two bale supporting rollers 14.f, 14.r which are rotatably mounted between the table frame parts 21.l, 21.r wherein at least one roller 14.F or 14.R is driven,
- in the embodiment several belts 19.1, 19.2, 19.3 positioned between the table frame parts 21.l, 21.r and guided around the bale supporting rollers 14.f, 14.r,
- a drive (not shown) for rotating at least one bale supporting roller 14.f, 14.r, and
- two lateral bobbin pairs each comprising two rotatable bobbins 11.1, 11.2, ...

The wrapping table actuator comprising a left piston-cylinder device 22.1 and a corresponding right piston-cylinder device 22.r and can pivot the wrapping table 8 with respect to the wrapping apparatus frame 13 around the axis 70 selectively into
- a bale receiving position,
- a bale wrapping position, or
- a bale depositing position.

The baler-wrapper combination 60, 61, 62 of the embodiment operates as follows while being moved in the travelling direction TD: The bale forming apparatus 60
- picks up loose crop material (hay, straw, silage, e.g.) from the ground G,
- conveys the picked-up loose material through the feeding channel into the bale forming chamber Ch,
- forms under pressure a round-cylindrical bale B in the drum-shaped bale forming chamber Ch,
- wraps in the bale forming chamber Ch the circumferential surface of the bale B into a net or into several strands of twine while the discharge gate 21 is still closed,
- opens the discharge gate 29, and
- ejects the bale B, e.g. by using the force of gravity or the tension of a pressing belt or by means of a bale ejector.

The bale carrier 2 is pivotal with respect to the bale forming apparatus 60 and to the bale wrapping apparatus 62. The bale carrier 2 is pivotal around the horizontal carrier rotating axis 49 being perpendicular to the travelling direction TD. In the embodiment this axis 49 is formed by the coaxial axles 49.1 and 49.2. Thereby the bale carrier 2 can be pivoted with respect to the bale forming apparatus 60 and with respect to the wrapping apparatus 62 between
- a bale receiving position (Fig. 2) and
- a bale depositing position (Fig. 1, Fig. 4).

In the bale receiving position the bale carrier 2 is at least partially positioned below the discharge gate 29 of the bale forming apparatus 60 when the discharge gate 29 is opened. The bale B which has been ejected out of the bale forming chamber Ch drops onto the bale carrier 2 being in the bale receiving position and rests on the bale carrier bottom 31.l, 31.r, 3.1, 3.2, 3.3. The bale transfer actuator 12.l, 12.r pivots the bale carrier 2 with the bale B around the axis 49 away from the bale forming chamber Ch and against the force of gravity towards the wrapping table 8 until the bale carrier 2 reaches the bale depositing position. When the bale carrier 2 is in the bale depositing position, the bale carrier bottom 31.l, 31.r, 3.1, 3.2, 3.3 is in a tilted descending position, cf. Fig. 4. Thanks to the force of gravity the bale B rolls from the bale carrier 2 being in the bale depositing position onto the wrapping table 8 being in the bale receiving position.

The wrapping table 8 comprising the left and right frame parts 21.l, 21.r is mounted at the wrapping table frame 13. The wrapping table 8 can be pivoted around the horizontal axle 70 which is perpendicular to the travelling direction TD and parallel to the axis 49. Thereby the wrapping table 8 can be pivoted between
- the bale receiving position,
- the bale wrapping position, and
- the bale deposition position.

The wrapping table actuator 22.l, 22.r
- can pivot the wrapping table 8 with respect to the wrapping apparatus frame 13 between these three positions and
- can keep the wrapping table 8 in one position also when the wrapping table 8 carries the bale B.

When the bale carrier 2 is moved into the bale depositing position, the wrapping table 8 not yet carrying the bale B is in the bale receiving position. The bale B rolls from the bale carrier 2 onto the wrapping table 8 being in the bale receiving position. The wrapping table 8 carrying the bale B is now pivoted into the bale wrapping position and is kept in this position. The belts 19.1, 19.2, 19.3 rotate the bale B carried on the wrapping table 8 around the bale center axis. In addition the reservoir holders 9.1 and 9.2 with the film rolls R.1 and R.2 are moved around the rotated bale B. The entire surface of the rotated bale B is wrapped while the wrapping table 8 is in the bale wrapping position.

The round-cylindrical bale B is ejected, transferred, and positioned on the wrapping table 8 such that the bale's center axis remains substantially perpendicular to the traveling direction TD, perpendicular to the transfer direction of the bale carrier 2, and perpendicular to the drawing planes of Fig. 1 and Fig. 6. The bale supporting rollers 14.f, 14.r or the belts 19.1, 19.2, 19.3 of the wrapping table 8 rotate the bale B on the wrapping table 8 around the bale's center axis, i.e. around an axis parallel to the ground G, perpendicular to the travelling direction TD and perpendicular to the drawing plane of Fig. 1 and Fig. 6. The wrapping ring drive rotates the wrapping ring 10 with respect to the wrapping table frame 21.l, 21.r around a substantially vertical axis. Thereby the two reservoir holders 9.1, 9.2 and also the film rolls R.1, R.2 are moved around the rotated bale B. Two film webs W.1, W.2 are pulled from the film rolls R.1, R.2 and are placed on the bale's surface. The entire surface of the bale B is wrapped into several layers of plastic film. In the embodiment the sensor 24 comprising a counter roller measures the distance over which the circumferential surface of the bale B on the wrapping table 8 is moved, cf. Fig. 1.

In one implementation the sensor 24 counts the actual length of the path over which the circumferential surface of the rotated bale is transported. The bale diameter and the required number of plastic film layers determine the required path length. After the required length of plastic film is placed on the bale's surface, the web clamping and severing device clamps and severs both film webs W.1, W.2. The wrapping table 8 is pivoted into the bale depositing position. The entirely wrapped bale B rolls from the wrapping table 8 in a direction opposite to the travelling direction TD onto the ground G. It is possible that a tilting unit (quarter turn) is positioned behind the wrapping table 8 and tilts the wrapped round-cylindrical bale B onto a front face before the bale reaches the ground.

In the following the operation of the bale transfer unit 61 is explained in more detail. After the formed bale B is ejected out of the bale forming chamber Ch, the ejected bale B first hits the traversal rod 3.3, cf. Fig. 2. The rod 3.3 guides the dropped bale B onto the bale carrier 2. The bale B is carried by the three traversal support rods 3.1, 3.2, 3.3 of the bale carrier 2. The traversal bale support rods 3.1, 3.2, 3.3 and the longitudinal rods 31.l, 31.r together form the bottom of the bale carrier 2. The two lateral guiding sheets 1.l, 1.r prevent the bale B from being laterally shifted away from the bale carrier 2 even if the baler-wrapper combination 60, 61, 62 inclines around an axle which is parallel or angular to the travelling direction TD.

For pivoting the bale carrier 2, the bale support frame parts 31.l, 31.r and therefore the guiding sheets 1.l, 1.r can rotate with respect to the frame 6 around a carrier rotating axle 49 which is defined by the axles 49.l, 49.r and which is positioned at the rear lower edges of the guiding sheets 1.l, 1.r.

The bale carrier 2 forms a trough with the guiding sheets 1.l, 1.r as the trough sidewalls. Every guiding sheet 1.l, 1.r has an elongated upper segment 18.l, 18.r which is outwardly angled with respect to the remaining lower segment of the guiding sheet 1.l, 1.r, cf. Fig. 3 and Fig. 4. Thanks to the tapering shape of the bale carrier 2 the falling bale B is securely guided into a position between the guiding sheets 1.l, 1.r when the bale B is ejected and drops out of the bale forming chamber Ch.

The bale pusher 4, 5 comprises
- a traversal bale pusher rod 4 and
- a bracket 5 mounted at the traversal bale pusher rod 4.

The bracket 5 has the shape of an U and comprises a traversal bracket rod 15 being parallel to the bale pusher rod 4 and two lateral arms 27.l, 27.r carrying the bracket rod 15 between them. Therefore a constant distance between the bracket rod 15 and the pusher rod 4 occurs. In one implementation the traversal bracket rod 15 is implemented as an idler roller or carries an idler roller with a hollow kernel. The rod 15 itself or the idler roller on the rod 15 comes temporarily in contact with a bale B to be transferred.

According to the invention an own actuator for the bale pusher 4, 5 is saved. The mechanical coupling device comprises a left coupling device part 16.l and a right coupling device part 16.r. Every coupling device part 16.l, 16.r comprises
- a coupling rod 7.l, 7.r,
- a first (lower) link 17.l.f, 17.r.f, and
- a second (upper) link 17.l.r, 17.r.r.

The first link 17.l.f, 17.r.f hingedly couples the coupling rod 7.l, 7.r with the frame 6 of the combination. The second link 17.l.r, 17.r.r hingedly couples the coupling rod 7.l, 7.r with the traversal rod 4 of the bale pusher 4, 5. The second link 17.l.r, 17.r.r is rigidly connected with the bale pusher rod 4 and is hingedly connected with the coupling rod 7.l, 7.r.

A lateral and therefore horizontal distance between the coupling device parts 16.l, 16.r and the guiding sheets 1.l, 1.r of the bale carrier 2 occurs in every position of the bale carrier 2. The entire bale carrier 2 including the guiding sheets 1.l, 1.r is positioned in the space between the coupling elements 16.l and 16.r. Thanks to the first and second links the coupling rod 7.l, 7.r can pivot with respect to the frame 6 and with respect to the traversal bale pusher rod 4. Thanks to the lateral distance the coupling device parts 16.l, 16.r do not form an obstacle against the movement of the bale carrier 2 and do not touch a carried bale.

As can be seen in Fig. 2 and Fig. 3, the traversal bale pusher rod 4 connects the guiding sheets 1.l, 1.r with each other and is hingedly mounted near the rear edges and near the upper edges of the guiding sheets 1.l, 1.r. The bale pusher rod 4 protrudes in both lateral directions beyond the guiding sheets 1.l, 1.r of the bale carrier 2. A left bearing 25.l and a right bearing 25.r carry the bale pusher rod 4 at the bale carrier 2 and enable a rotation of the bale pusher rod 4 with respect to the bale carrier 2 around the rod axis. The bale pusher 4, 5 can only rotate with respect to the bale carrier 2 but cannot perform a further relative movement. When the bale carrier 2 is in the parking position (Fig. 2), the bracket 5 is preferably entirely positioned in the space between the guiding sheets 1.l, 1.r.

The coupling device parts 16.l, 16.r are outside of the bale carrier 2, i.e. the bale carrier 2 and thereby the carried bale B is positioned between the coupling device parts 16.l, 16.r. Therefore the coupling device parts 16.l, 16.r do not form an obstacle against guiding the bale B into a proper position on the bale carrier bottom 31.l, 31.r, 3.1, 3.2, 3.3 or against transferring a bale B onto the bale carrier 2 or from the bale carrier 2 onto the wrapping table 8. Thanks to the articulation with the links 17.l.f, 17.r.f, 17.l.r, 17.r.r the distance between the mounting point of the coupling device part 16.1, 16.r at the frame 6 and the traversal bale pusher rod 4 can change. This distance increases when the bale carrier 2 is moved from the bale receiving position into the bale depositing position.

Fig. 2 to Fig. 4 show the movement of the bale carrier 2 from the bale receiving position (Fig. 2) via an intermediate position (Fig. 3) into the bale depositing position (Fig. 4) and the corresponding simultaneous rotational movement of the bale pusher 4, 5 which is enforced by the moved bale carrier 2 and the mechanical coupling device 16.l, 16.r.

When the bale carrier 2 is in the bale receiving position (Fig. 2), the bale pusher 4, 5 is in the parking position in which the bale pusher rod 5 has the smallest distance to the bale forming apparatus 60 and the largest distance to the bale wrapping apparatus 62. This parking position is preferably taken while a bale B on the wrapping table 8 is wrapped and/or a further bale is formed in the bale forming chamber Ch or no crop material is processed. The coupling device parts 16.l and 16.r are folded together (shortest distance between the mounting point at the frame 6 and the bale pusher rod 4). The bale pusher rod 4 is in its highest position and the bracket 5 is in a substantially vertical position. In this vertical position the bale pusher 4, 5 prevents a bale B on the bale supporting device (wrapping table 8) from rolling back onto the bale carrier 2.

After a bale B has dropped from the bale forming chamber Ch onto the bale carrier 2, the bale transfer actuator 12.l, 12.r pivots the bale carrier 2 carrying the bale B into the bale depositing position. After the bale B has moved onto the wrapping table 8 being in the bale receiving position and preferably after the wrapping table 8 with the bale B is pivoted into the bale wrapping position, the bale transfer actuator 12.l, 12.r pivots the bale carrier 2 back into the bale receiving position.

In the embodiment the bale transfer actuator 12.l, 12.r comprises left and right double-acting lateral hydraulic or pneumatic piston-cylinder units 12.l, 12.r. The left piston-cylinder device 12.l is connected with the left guiding sheet 1.l of the bale carrier 2 in a left connecting axle 30.l. The right piston-cylinder device 12.r is connected with the right guiding sheet 1.r of the bale carrier 2 in a right connecting axle 30.r. Extracting the rods out of the cylinders causes the bale carrier 2 to be pivoted into the bale depositing position. Retracting the rods back into the cylinders causes the bale carrier 2 to be pivoted back into the bale receiving position.

After the bale B drops onto the bale carrier 2 being in the bale receiving position, the bale transfer actuator 12.l, 12.r expand and rotates the bale carrier 2 together with the bale B around the carrier rotating axis 49 into the bale depositing position. When the bale carrier 2 is moved into the bale depositing position (Fig. 4), the bale carrier 2 is pivoted away from the bale forming chamber Ch. The bottom 31.1, 31.r, 3.1, 3.2, 3.3 of the bale carrier 2 is moved from an orientation slightly declining towards the bale forming chamber Ch (Fig. 2) into an orientation significantly declining towards the wrapping table 8 (Fig. 4). As the bale pusher rod 4 is mounted near the rear edges and near the upper edges of the guiding sheets 1.l, 1.r, the bale pusher rod 4 together with the bale carrier 2 is moved with respect to the bale carrier 2 from the parking position away from the bale forming apparatus 60 into the working and follows a trajectory which forms a part of a circle. The height over ground of the bale pusher rod 4 decreases when the bale carrier 2 is moved into the bale depositing position and when the bale carrier 2 moves the bale pusher rod 4 such that the bracket 5 moves towards the bale wrapping apparatus 62.

In addition the bale pusher rod 4 is rotated with respect to the bale carrier 2 around the rod center axis when the bale carrier 2 is moved into the bale deposition position. This rotation is caused by two the coupling elements 16.l, 16.r and as the bale pusher rod 4 is rotatably mounted at the moved bale carrier 2. The distance between the mounting point of the coupling device parts 16.l, 16.r at the frame 6 and the bale pusher rod 4 increases when the bale carrier 2 is rotated. In one implementation the height over ground of the bracket rod 15 decreases due to this movement. In a further implementation this height over ground increases or remains constant.

In the embodiment the bracket 5 is rigidly mounted at the rotated bale pusher rod 4. The enforced rotation of the bale pusher rod 4 causes the rigidly connected bracket 5 of the bale pusher 4, 5 to rotate around the rod 4 from a substantially vertical position (Fig. 1) into a substantially horizontal position (Fig. 3). The traversal rod 15 of the bracket 5 is rotated around the traversal rod 4 and touches the bale's circumferential surface and helps to shift and lift the bale B from the bale carrier 2 onto the wrapping table 8. In addition the rotation of the bracket 5 can remove some debris from the wrapping table 8.

In the embodiment a bale presence sensor (not shown) detects the event that an ejected bale B drops onto the bale carrier 2 being in the bale receiving position. In one implementation this sensor comprises a movable element which is moved by the bale B against the force of a biasing element. In a further implementation the bale presence sensor detects a significant increase of the carrier's weight caused by the event that the bale B drops on the bale carrier 2. It is also possible that the bale B blocks a light barrier.

The detection that a bale B is on the bale carrier 2 triggers the event that the bale transfer actuator 12.l, 12.r pivots the bale carrier 2 together with the bale B into the bale depositing position. The bale pusher 4, 5 is moved into the working position (Fig. 4). It bridges the gap between the bale carrier 2 and the wrapping table 8 and prevents the bale B on the wrapping table 8 from rolling back towards the bale carrier 2 (Fig. 2).

In the embodiment the bale presence sensor (not shown) further detects the event that the bale carrier 2 being in the bale depositing position does no longer carries the bale B. This event means that the bale is now on the wrapping table 8. It is possible that a further bale presence sensor positively detects the step that a bale is moved onto the wrapping table 8. The detection of the event that no bale is on the bale carrier 2 and/or that a bale is on the wrapping table 8 triggers the step that the empty bale carrier 2 is moved back into the bale receiving position. The bale pusher 4, 5 is moved back into the parking position (Fig. 2).

Reference signs used in the claims will not limit the scope of the claimed invention. The term "comprises" does not exclude other elements or steps. The articles "a", "an", and "one" do not exclude a plurality of elements. Features specified in several depending claims may be combined in an advantageous manner.

**LIST OF REFERENCE SIGNS**

| | |
|---|---|
| 1.l | left guiding sheet of the bale carrier 2, mounted at the bale support rods 3.1, 3.2, comprises the left angled upper segment 18.1 |
| 1.r | right guiding sheet of the bale carrier 2, mounted at the bale support rods 3.1, 3.2, comprises the right angled upper segment 18.r |
| 2 | bale carrier, comprises the guiding sheets 1.l, 1.r, the bale support frame parts 31.l, 31.r, the bale support rods 3.1, 3.2, 3.3, and the axles 49.l, 49.r, is pivotal around the axis 49 |
| 3.1, 3.2, 3.3 | traversal bale support rods of the bale carrier 2, belong to the bale carrier bottom, form a cradle |
| 4 | traversal rod of the bale pusher, rotatably mounted at the guiding sheets 1.l, 1.r of the bale carrier 2 |
| 5 | bale pusher bracket, comprises the bracket rod or roller 15 and the arms 27.l, 27.r, rigidly mounted at the bale pusher rod 4 |
| 6 | frame of the combination 60, 61, 62 |
| 7.l | coupling rod of the left coupling element 16.l |
| 7.r | coupling rod of the right coupling element 16.r |
| 8 | wrapping table, comprises the frame parts 21.l, 21.r, the rollers 14.l, 14.r, and the belts 19.1, 19.2, 19.3, can be pivoted with respect to the wrapping apparatus frame 15 around the axle 70, serves as the bale supporting device |
| 9.1, 9.2 | reservoir holders, carried by the wrapping ring 10, carry the reservoirs R.1, R.2 |
| 10 | wrapping ring, carries the reservoirs holders 9.1, 9.2, is rotated around the bale B on the wrapping table 8 |
| 11.1, 11.2, ... | lateral bobbins, rotatably mounted at the wrapping table frame 21.l, 21.r |
| 12.l | left hydraulic or pneumatic piston-cylinder unit for pivoting the bale carrier 2 around the axle 49, belongs to the bale transfer actuator |
| 12.r | right hydraulic or pneumatic piston-cylinder unit for pivoting the bale carrier 2 around the axle 49, belongs to the bale transfer actuator |
| 13 | wrapping apparatus frame for carrying the wrapping table 8 |
| 14.f | front roller of the wrapping table 8 |
| 14.r | rear roller of the wrapping table 8 |
| 15 | traversal rod or roller of the bale pusher bracket 5, carried by the lateral arms 27.l, 27.r, extends parallel to the traversal rod 4 |
| 16.l | left coupling device part, comprises the rod 7.l and the links 17.l.f and 17.l.r |
| 16.r | right coupling device part, comprises the rod 7.r and the links 17.r.f and 17.r.r |
| 17.l.f | first (lower) connecting link of the left coupling device part 16.l, mounted at the frame 6 |
| 17.r.f | first (lower) connecting link of the right coupling device part 16.r, mounted at the frame 6 |
| 17.l.r | second (upper) connecting link of the left coupling device part 16.l, mounted at the left connecting rod 7.l |
| 17.r.r | second (upper) connecting link of the right coupling device part 16.r, mounted at the right connecting rod 7.r |
| 18.l | outwardly angled upper segment of the left guiding sheet 1.l |
| 18.r | outwardly angled upper segment of the right guiding sheet 1.r |
| 19.1, | parallel belts of the wrapping table 8, guided around the rollers 14.f, 14.r |
| 19.2, ... | |
| 21.l | left frame part of the wrapping table 8 |
| 21.r | right frame part of the wrapping table 8 |
| 22.l | left hydraulic or pneumatic piston-cylinder unit for pivoting the wrapping table 8 around the axle 70 |
| 22.r | right hydraulic or pneumatic piston-cylinder unit for pivoting the wrapping table 8 around the axle 70 |
| 23 | pressing roller of the bale forming apparatus 60, mounted at the tailgate 29 or at the front housing |
| 24 | path sensor, measures the distance over which the of the surface of the rotated bale B on the wrapping table 8 is moved |
| 25.l | left bearing for the traversal bale pusher rod 4 in the left guiding sheet 1.l |
| 25.r | right bearing for the traversal bale pusher rod 4 in the right guiding sheet 1.r |
| 27.l, 27.r | lateral arms of the bale pusher bracket 5, carry the bracket rod 15, rigidly mounted at the traversal rod 4 |
| 29 | pivotal discharge gate (tailgate) of the bale forming apparatus 60 |
| 30.l | connecting axle for connecting the left piston-cylinder unit 12.l with the left guiding sheet 1.l |
| 30.r | connecting axle for connecting the right piston-cylinder unit 12.r with the right guiding sheet 1.r |
| 31.l | left part of the bale support frame at which the traversal bale support rods 3.1, 3.2, 3.3 are rigidly mounted, belongs to the bale carrier bottom |
| 31.r | right part of the bale support frame at which the traversal bale support rods 3.1, 3.2, 3.3 are rigidly mounted, belongs to the bale carrier bottom |
| 49 | carrier rotating axle of the bale carrier 2, defined and provided by the axles 49.l, 49.r |
| 49.l | left connecting axle for carrying the bale carrier 2 |
| 49.r | right connecting axle for carrying the bale carrier 2 |
| 50.l | left ground-engaging wheel |
| 50.r | right ground-engaging wheel |
| 60 | bale forming apparatus, provides the bale forming chamber Ch |
| 61 | bale transfer unit, comprises the bale carrier 2, the bale pusher 4, 5, the coupling elements 16.l, 16.r, and the bale transfer actuator 12.l, 12.r |
| 62 | bale wrapping apparatus, comprises the wrapping apparatus frame 13, the wrapping table 8, the wrapping table actuator 22.l, 22.r, the wrapping ring 10, and the reservoir holders 9.1, 9.2 |
| 70 | horizontal pivoting axle of the wrapping table 8 with respect to the wrapping apparatus frame 13 |
| B | round-cylindrical bale formed in the bale forming chamber Ch and to be wrapped on the wrapping table 8 |
| Ch | provided drum-shaped bale forming chamber |
| G | ground over which the combination 60, 61, 62 is moved |
| R.1, R.2 | wrapping material reservoirs (film rolls), kept by the reservoir holders 9.1, 9.2 |
| TD | travelling direction in which the combination 60, 61, 62 is moved over ground G |

## Claims

1. Bale forming system comprising
- a bale forming apparatus (60) providing a bale forming chamber (Ch) and
- a bale transfer unit (61) with a bale carrier (2) and a bale transfer actuator (12.l, 12.r),
wherein the bale carrier (2) is arranged to carry a bale (B),
wherein the bale carrier (2) is moveable with respect to the bale forming apparatus (60) between
- a bale receiving position and
- a bale depositing position,
wherein the bale forming apparatus (60) is arranged
- to form a bale (B) in the bale forming chamber (Ch) and
- to eject the formed bale (B) out of the bale forming chamber (Ch),
wherein the bale carrier (2) being in the bale receiving position is positioned at least partly below the bale forming chamber (Ch),
thereby arranged to receive an ejected bale (B),
wherein the bale transfer actuator (12.l, 12.r) is arranged to move the bale carrier (2) carrying the bale (B)
- from the bale receiving position
- into the bale depositing position,
wherein the bale carrier (2) being in the bale depositing position is arranged to cause a carried bale (B) to move from the bale carrier (2) in a direction away from the bale forming apparatus (60),
**characterized in that**
the bale transfer unit (61) further comprises
- a bale pusher (4, 5) and
- a mechanical coupling device (16.l, 16.r),
wherein the bale pusher (4, 5) is moveable with respect to the bale carrier (2) between
- a parking position and
- a working position,
wherein the bale pusher (4, 5) being in the working position is positioned between
- the bale forming apparatus (60) and
- a bale (B) on the bale carrier (2) or having left the bale carrier (2) being in the bale depositing position, and
wherein the mechanical coupling device (16.l, 16.r) couples
- a movement of the bale carrier (2) from the bale receiving position into the bale depositing position with
- a movement of the bale pusher (4, 5) from the parking position into the working position.

2. Bale forming system according to claim 1,
**characterized in that**
the bale carrier (2) is pivotal with respect to the bale forming apparatus (60) around a carrier rotating axis (49) and
the bale pusher (4, 5) is rotatable with respect to the bale carrier (2) around a pusher rotating axis (4).

3. Bale forming system according to claim 2,
**characterized in that**
the carrier rotating axis (49) is positioned between
- the pusher rotating axis (4) and
- the bale forming apparatus (60).

4. Bale forming system according to one of the preceding claims,
**characterized in that**
the bale forming system comprises a frame (6) belonging to the or carrying the bale forming apparatus (60),
wherein the bale carrier (2) is moveable with respect to the frame (6) between
- the bale receiving position and
- the bale depositing position and
wherein the mechanical coupling device (16.l, 16.r)
- is connected with the frame (6) and with the bale pusher (4, 5) and
- is movable with respect to the bale carrier (2).

5. Bale forming system according to claim 4,
**characterized in that**
the mechanical coupling device comprises at least one coupling device part (16.l, 16.r), wherein the or every coupling device part (16.l, 16.r) comprises
- a connecting rod (7.l, 7.r),
- a first link (17.l.f, 17.r.f), and
- a second link (17.l.r, 17.r.r),
wherein the first link (17.l.f, 17.r.f) hingedly couples the connecting rod (7.l, 7.r) with the frame (6) and
wherein the second link (17.l.r, 17.r.r) hingedly couples the connecting rod (7.l, 7.r) with the bale pusher (4, 5).

6. Bale forming system according to one of the preceding claims,
**characterized in that**
the bale pusher (4, 5) comprises
- a traversal bale pusher rod (4) and
- a pushing element (5) mounted at the rod (4),
wherein the bale pusher rod (4) is connected
- with the bale carrier (2) and
- with the mechanical coupling device (16.l, 16.r), and
wherein the movement of the bale carrier (2) into the bale depositing position causes an enforced pivotal movement of the bale pusher rod (4) with respect to the bale carrier (2), thereby causing the bale pusher (4, 5) to be moved into the working position.

7. Bale forming system according to claim 6,
**characterized in that**
the enforced movement of the bale pusher rod (4) causes the pushing element (5) to be moved away from the bale forming apparatus (60).

8. Bale forming system according to one of the preceding claims,
**characterized in that**
the bale pusher (4, 5) comprises a traversal bale pusher rod (4) and
the bale carrier (2) comprises two parallel plates (1.l, 1.r),
wherein the bale carrier (2) is arranged to carry a bale (B) between the plates (1.l, 1.r) and
wherein the traversal bale carrier rod (4) is movably connected with both plates (1.l, 1.r) of the bale carrier (2).

9. Bale forming system according to claim 8,
**characterized in that**
the bale pusher (4, 5) comprises a pushing element (5) which is connected with the bale pusher rod (4),
wherein the pushing element (5) is positioned between the plates (1.l., 1.r) of the bale carrier (2)
at least when the bale pusher (4, 5) is in the parking position.

10. Bale forming system according to one of the preceding claims,
**characterized in that**
a movement of the bale pusher (4, 5)
- from the parking position
- into the working position
increases the distance between
- the bale pusher (4, 5) and
- the bale forming apparatus (60).

11. Bale forming system according to one of the preceding claims, **characterized in that**
the bale pusher (4, 5) is rotatable with respect to the bale carrier (2),
wherein the bale pusher (4, 5) being in the working position points away from the bale forming apparatus (60),
wherein the movement of the bale pusher (4, 5) from the parking position into the working position comprises
a pivotal movement of the bale pusher (4, 5) with respect to the bale carrier (2) which increases the height over ground of that end (15) of the bale pusher (4, 5).

12. Bale forming system according to one of the preceding claims,
**characterized in that**
the bale pusher (4, 5) is rotatably mounted at the bale carrier (2).

13. Bale forming system according to one of the preceding claims,
**characterized in that**
the mechanical coupling device comprises two coupling device parts (16.l, 16.r),
wherein both coupling device parts (16.l, 16.r) are coupled with the bale pusher (4, 5) and
wherein the bale carrier (2) is positioned in the space between the coupling device parts (16.l, 16.r).

14. Bale forming system according to one of the preceding claims,
**characterized in that**
the bale transfer unit (61) further comprises a bale presence sensor
which is arranged to detect the presence of a bale (B) on the bale carrier (2),
wherein the bale forming system is arranged to trigger the bale transfer actuator (12.l, 12.r) to move the bale carrier (2) into the bale depositing position
when the bale presence sensor has detected the presence of a bale (B) on the bale carrier (2).

15. Bale forming system according to one of the preceding claims,
**characterized in that**
the bale forming system further comprises a bale supporting device (8),
wherein the bale supporting device (8) is arranged to carry a bale (B),
wherein the bale carrier (2) is positioned between
- the bale forming apparatus (60) and
- the bale supporting device (8),
wherein the bale carrier (2) being in the bale depositing position causes a bale (B) to move from the bale carrier (2) onto the bale supporting device (8), and
wherein the bale pusher (4, 5) being in the working position is positioned between
- the bale forming apparatus (60) and
- the bale supporting device (8).

16. Bale forming system according to claim 15,
**characterized in that**
the bale pusher (4, 5) being in the working position is positioned between
- the bale carrier (2) being in the bale depositing position and
- the bale supporting device (8).

17. Bale forming system according to claim 15 or claim 16,
**characterized in that**
a movement of the bale pusher (4, 5) with respect to the bale carrier (2)
- from the parking position
- into the working position
decreases the distance between
- the bale pusher (4, 5) and
- the bale supporting device (8).

18. Bale forming system according to one of the claims 15 to 17,
**characterized in that**
the bale carrier (2) is pivotal with respect to the bale forming apparatus (60) around a carrier rotating axis (49) and
the bale pusher (4, 5) is rotatable with respect to the bale carrier (2) around a pusher rotating axis (4),
wherein the pusher rotating axis (4) is positioned between
- the carrier rotating axis (49) and
- the bale supporting device (8).

19. Bale forming system according to one of the claims 15 to 18,
**characterized in that**
the bale pusher (4, 5) being in the working position
- is positioned angularly above the bale supporting device (8) and
- is arranged for preventing a bale (B) on the bale supporting device (8) for moving towards the bale carrier (2).

20. Baler-wrapper combination comprising
**characterized in that**
- a bale forming system according to one of the claims 15 to 19 and
- a bale wrapping apparatus (62),
wherein the bale supporting device (8) of the bale forming system
- belongs to the bale wrapping apparatus (62) and
- is arranged to carry a bale (B) to be wrapped, and
wherein the bale wrapping apparatus (62) is arranged to wrap a bale (B) carried on the bale supporting device (8).

21. Method for forming a bale (B)
by using a bale forming system comprising
- a bale forming apparatus (60) providing a bale forming chamber (Ch) and
- a bale transfer unit (61) with a bale carrier (2) and a bale transfer actuator (12.l, 12.r),
wherein the bale carrier (2) is movable with respect to the bale forming apparatus (60) between
- a bale receiving position and
- a bale depositing position,
wherein the method comprises the steps that
- the bale forming apparatus (60) forms the bale (B) in the provided bale forming chamber (Ch) and ejects the formed bale (B) out of the bale forming chamber (Ch),
- the ejected bale (B) moves onto the bale carrier (2) being in the bale receiving position,
- the bale transfer actuator (12.l, 12.r) moves the bale carrier (2) carrying the bale (B) with respect to the bale forming apparatus (60) from the bale receiving position into the bale depositing position, and
- the bale carrier (2) being in the bale depositing position causes the carried bale (B) to move from the bale carrier (2) in a direction away from the bale forming apparatus (60),
**characterized in that**
the bale transfer unit (61) further comprises
- a moveable bale pusher (4, 5) and
- a mechanical coupling device (16.l, 16.r),
wherein the bale pusher (4, 5) is moveable with respect to the bale carrier (2) between
- a parking position and
- a working position,
wherein the mechanical coupling device (16.l, 16.r) couples
- the movement of the bale carrier (2) from the bale receiving position into the bale depositing position with
- a movement of the bale pusher (4, 5) with respect to the bale carrier (2) from the parking position into the working position,
wherein the step that the bale transfer actuator (12.l, 12.r) moves the bale carrier (2) into the bale depositing position causes the bale pusher (4, 5) to be moved from the parking position into the working position, and
wherein the event that the bale carrier (2) reaches the bale depositing position
causes the bale pusher (4, 5) now being in the working position to prevent the bale (B) which has been moved away from the bale carrier (2) to be moved towards the bale forming apparatus (60).

22. Bale forming method according to claim 21,
**characterized in that**
the step that the bale pusher (4, 5) is moved from the parking position into the working position comprises the step that
the distance between
- the bale pusher (4, 5) and
- the bale forming apparatus (60)
increases.

23. Bale forming method according to claim 21 or claim 22,
**characterized in that**
the step that the bale transfer actuator (12.l, 12.r) moves the bale carrier (2) into the bale depositing position causes the step that
the bale carrier (2) is rotated with respect to the bale forming apparatus (60) away from the bale forming apparatus (60) and
the step that the bale pusher (4, 5) is moved into the working position comprises the step that
the bale pusher (4, 5) is moved with respect to the bale carrier (2) away from the bale forming apparatus (60).

24. Bale forming method according to one of the claims 21 to 23,
**characterized in that**
the bale pusher (4, 5) comprises
- a traversal bale pusher rod (4) being connected with the bale carrier (2) and
- a pushing element (5) being mounted at the bale pusher rod (4),
wherein the step that the bale pusher (4, 5) is moved into the working position comprises the steps that
the bale pusher rod (4) is pivoted with respect to the bale carrier (2), and
the pivoting bale pusher rod (4) moves the pushing element (5) away from the bale forming apparatus (60).

25. Bale forming method according to one of the claims 21 to 24,
**characterized in that**
the bale forming system further comprises a bale supporting device (8),
wherein the bale carrier (2) is positioned between
- the bale forming apparatus (60) and
- the bale supporting device (8),
wherein the step that the carried bale (B) is caused to move away from the bale forming apparatus (60) comprises the step that
the bale (B) moves from the bale carrier (2) being in the bale depositing position onto the bale supporting device (8).

26. Bale forming method according to claim 25,
**characterized in that**
the distance between the bale pusher (4, 5) and the bale supporting device (8) decreases
when the bale pusher (4, 5) is moved from the parking position into the working position.

27. Bale forming method according to claim 26,
**characterized in that**
the step that the bale transfer actuator (12.l, 12.r) moves the bale carrier (2) into the bale depositing position causes the step that
the bale carrier (2) is rotated with respect to the bale forming apparatus (60) towards the bale supporting device (8) and
the step that the bale pusher (4, 5) is moved into the working position comprises the step that
the bale pusher (4, 5) is moved with respect to the bale carrier (2) towards the bale supporting device (8).

28. Method for forming and wrapping a bale (B)
by using a baler-wrapper combination comprising
- a bale forming apparatus (60) providing a bale forming chamber (Ch),
- a bale wrapping apparatus (62) with a bale supporting device (8), and
- a bale transfer unit (61) with a bale carrier (2) and a bale transfer actuator (12.l, 12.r),
wherein the method comprises the step that the bale (B) is formed and moved onto the bale supporting device (8) according to one of the claims 25 to 27 and
wherein the method comprises the further step that the bale wrapping apparatus (62) wraps the bale (B) carried on the bale supporting device (8).

29. Bale forming and wrapping method according to claim 28,
**characterized in that**
the method comprises the further step that
the bale transfer actuator (12.l, 12.r) moves the bale carrier (2)
- from the bale depositing position
- back into the bale receiving position,
after the bale (B) moves onto the bale supporting device (8) and
before or while the step of wrapping the bale (B) on the bale supporting device (8) is performed.

## Patentansprüche

1. Ballenformsystem, mit:
- einer Ballenformvorrichtung (60), die eine Ballenformkammer (Ch) bereitstellt, und
- einer Ballenübertragungseinheit (61) mit einem Ballenträger (2) und einem Ballenübertragungsaktuator (12.l, 12.r),
wobei der Ballenträger (2) angeordnet ist, um einen Ballen (B) zu tragen,
wobei der Ballenträger (2) relativ zu der Ballenformvorrichtung (60) zwischen
- einer Ballenempfangsstellung und
- einer Ballenabgabestellung
beweglich ist,
wobei die Ballenformvorrichtung (60) angeordnet ist, um
- einen Ballen (B) in der Ballenformkammer (Ch) zu formen und
- den geformten Ballen (B) aus der Ballenformkammer (Ch) auszuwerfen,
wobei der sich in der Ballenempfangsstellung befindende Ballenträger (2) mindestens teilweise unterhalb der Ballenformkammer (Ch) angeordnet ist,
und dadurch zum Empfangen eines ausgeworfenen Ballens (B) angeordnet ist,
wobei der Ballenübertragungsaktuator (12.l, 12.r) angeordnet ist, um den den Ballen (B) tragenden Ballenträger (2)
- von der Ballenempfangsstellung
- in die Ballenabgabestellung
zu bewegen,
wobei der sich in der Ballenabgabestellung befindende Ballenträger (2) angeordnet ist, um zu bewirken, dass sich ein getragener Ballen (B) von dem Ballenträger (2) in eine Richtung weg von der Ballenformvorrichtung (60) bewegt,
**dadurch gekennzeichnet, dass**
die Ballenübertragungseinheit (61) weiterhin das Folgende aufweist:
- einen Ballenschieber (4, 5) und
- eine mechanische Kopplungsvorrichtung (16.l, 16.r),
wobei der Ballenschieber (4, 5) relativ zu dem Ballenträger (2) zwischen
- einer Parkstellung und
- einer Arbeitsstellung
beweglich ist,
wobei der sich in der Arbeitsstellung befindende Ballenschieber (4, 5) zwischen
- der Ballenformvorrichtung (60) und
- einem Ballen (B) auf dem Ballenträger (2) oder einem Ballen (B), der den in der Ballenabgabestellung befindlichen Ballenträger (2) verlassen hat
angeordnet ist, und
wobei die mechanische Kopplungsvorrichtung (16.l, 16.r)
- eine Bewegung des Ballenträgers (2) von der Ballenempfangsstellung in die Ballenabgabestellung mit
- einer Bewegung des Ballenschiebers (4, 5) von der Parkstellung in die Arbeitsstellung koppelt.

2. Ballenformsystem nach Anspruch 1,
**dadurch gekennzeichnet, dass**
der Ballenträger (2) um eine Trägerdrehachse (49) relativ zu der Ballenformvorrichtung (60) verschwenkbar ist und
der Ballenschieber (4, 5) um eine Schieberdrehachse (4) relativ zu dem Ballenträger (2) drehbar ist.

3. Ballenformsystem nach Anspruch 2,
**dadurch gekennzeichnet, dass**
die Trägerdrehachse (49) zwischen
- der Schieberdrehachse (4) und
- der Ballenformvorrichtung (60)
angeordnet ist.

4. Ballenformsystem nach einem der vorhergehenden Ansprüche,
**dadurch gekennzeichnet, dass**
das Ballenformsystem einen Rahmen (6) aufweist, der zu der Ballenformvorrichtung (60) gehört oder diese trägt,
wobei der Ballenträger (2) relativ zu dem Rahmen (6) zwischen
- der Ballenempfangsstellung und
- der Ballenabgabestellung
beweglich ist.
wobei die mechanische Kopplungsvorrichtung (16.l, 16.r)
- mit dem Rahmen (6) und mit dem Ballenschieber (4, 5) verbunden ist und
- relativ zu dem Ballenträger (2) beweglich ist.

5. Ballenformsystem nach Anspruch 4,
**dadurch gekennzeichnet, dass**
die mechanische Kopplungsvorrichtung mindestens ein Kopplungsvorrichtungsteil (16.l, 16.r) aufweist,
wobei das oder jedes Kopplungsvorrichtungsteil (16.l, 16.r)
- eine Verbindungsstange (7.l, 7.r),
- einen ersten Verbinder (17.l.f, 17.r.f), und
- einen zweiten Verbinder (17.l.r, 17.r.r)
aufweist,
wobei der erste Verbinder (17.l.f, 17.r.f) die Verbindungsstange (7.l, 7.r) gelenkig mit dem Rahmen (6) verbindet und
wobei der zweite Verbinder (17.l.r, 17.r.r) die Verbindungsstange (7.l, 7.r) gelenkig mit dem Ballenschieber (4, 5) verbindet.

6. Ballenformsystem nach einem der vorhergehenden Ansprüche,
**dadurch gekennzeichnet, dass**
der Ballenschieber (4, 5)
- eine Quer-Ballenschieberstange (4) und
- ein an der Stange (4) montiertes Schieberelement (5)
aufweist,
wobei die Ballenschieberstange (4)
- mit dem Ballenträger (2) und
- mit der mechanischen Kopplungsvorrichtung (16.l, 16.r)
verbunden ist, und
wobei die Bewegung des Ballenträgers (2) in die Ballenabgabestellung eine verstärkte Schwenkbewegung der Ballenschieberstange (4) relativ zu dem Ballenträger (2) hervorruft, wodurch bewirkt wird, dass der Ballenschieber (4, 5) in die Arbeitsstellung bewegt wird.

7. Ballenformsystem nach Anspruch 6,
**dadurch gekennzeichnet, dass**
die verstärkte Bewegung der Ballenschieberstange (4) bewirkt, dass das Schieberelement (5) von der Ballenformvorrichtung (60) weg bewegt wird.

8. Ballenformsystem nach einem der vorhergehenden Ansprüche,
**dadurch gekennzeichnet, dass**
der Ballenschieber (4, 5) eine Quer-Ballenschieberstange (4) aufweist und
der Ballenträger (2) zwei parallele Platten (1.l, 1.r) aufweist,
wobei der Ballenträger (2) angeordnet ist, um einen Ballen (B) zwischen den Platten (1.l, 1.r) zu tragen und
wobei die Quer-Ballenschieberstange (4) beweglich mit beiden Platten (1.l, 1.r) des Ballenträgers (2) verbunden ist.

9. Ballenformsystem nach Anspruch 8,
**dadurch gekennzeichnet, dass**
der Ballenschieber (4, 5) ein Schieberelement (5) aufweist, das mit der Ballenschieberstange (4) verbunden ist,
wobei das Schieberelement (5) zwischen den Platten (1.l, 1.r) des Ballenträgers (2) angeordnet ist,
zumindest dann, wenn sich der Ballenschieber (4, 5) in der Parkstellung befindet.

10. Ballenformsystem nach einem der vorhergehenden Ansprüche,
**dadurch gekennzeichnet, dass**
eine Bewegung des Ballenschiebers (4, 5)
- von der Parkstellung
- in die Arbeitsstellung
den Abstand zwischen
- dem Ballenschieber (4, 5) und
- der Ballenformvorrichtung (60)
vergrößert.

11. Ballenformsystem nach einem der vorhergehenden Ansprüche,
**dadurch gekennzeichnet, dass**
der Ballenschieber (4, 5) relativ zu dem Ballenträger (2) drehbar ist,
wobei der sich in der Arbeitsstellung befindende Ballenschieber (4, 5) von der Ballenformvorrichtung (60) weg zeigt,
wobei die Bewegung des Ballenschiebers (4, 5) von der Parkstellung in die Arbeitsstellung eine Schwenkbewegung des Ballenschiebers (4, 5) relativ zu dem Ballenträger (2) aufweist, die die Höhe dieses Endes (15) des Ballenschiebers (4, 5) über dem Boden vergrößert.

12. Ballenformsystem nach einem der vorhergehenden Ansprüche,
**dadurch gekennzeichnet, dass**
der Ballenschieber (4, 5) drehbar an dem Ballenträger (2) montiert ist.

13. Ballenformsystem nach einem der vorhergehenden Ansprüche,
**dadurch gekennzeichnet, dass**
die mechanische Kopplungsvorrichtung zwei Kopplungsvorrichtungsteile (16.l, 16.r) aufweist, wobei beide Kopplungsvorrichtungsteile (16.l, 16.r) mit dem Ballenschieber (4, 5) verbunden sind und
wobei der Ballenträger (2) in dem Raum zwischen den Kopplungsvorrichtungsteilen (16.l, 16.r) angeordnet ist.

14. Ballenformsystem nach einem der vorhergehenden Ansprüche,
**dadurch gekennzeichnet, dass**
die Ballenübertragungseinheit (61) weiterhin einen Ballenvorhandenseinsensor aufweist, der angeordnet ist, um das Vorhandensein eines Ballens (B) auf dem Ballenträger (2) zu detektieren, wobei das Ballenformsystem angeordnet ist, um den Ballenübertragungsaktuator (12.l, 12.r) zu veranlassen, den Ballenträger (2) in die Ballenabgabestellung zu bewegen, wenn der Ballenvorhandenseinsensor das Vorhandensein eines Ballens (B) auf dem Ballenträger (2) detektiert hat.

15. Ballenformsystem nach einem der vorhergehenden Ansprüche,
**dadurch gekennzeichnet, dass**
das Ballenformsystem weiterhin eine Ballenstützvorrichtung (8) aufweist,
wobei die Ballenstützvorrichtung (8) angeordnet ist, um einen Ballen (B) tragen,
wobei der Ballenträger (2) zwischen
- der Ballenformvorrichtung (60) und
- der Ballenstützvorrichtung (8)
angeordnet ist,
wobei der sich in der Ballenabgabestellung befindende Ballenträger (2) bewirkt, dass sich ein Ballen (B) von dem Ballenträger (2) auf die Ballenstützvorrichtung (8) bewegt, und
wobei der sich in der Arbeitsstellung befindende Ballenschieber (4, 5) zwischen
- der Ballenformvorrichtung (60) und
- der Ballenstützvorrichtung (8)
angeordnet ist.

16. Ballenformsystem nach Anspruch 15,
**dadurch gekennzeichnet, dass**
der sich in der Arbeitsstellung befindende Ballenschieber (4, 5) zwischen
- dem sich in der Ballenabgabestellung befindenden Ballenträger (2) und
- der Ballenstützvorrichtung (8)
angeordnet ist.

17. Ballenformsystem nach Anspruch 15 oder Anspruch 16,
**dadurch gekennzeichnet, dass**
eine Bewegung des Ballenschiebers (4, 5) relativ zu dem Ballenträger (2)
- von der Parkstellung
- in die Arbeitsstellung
den Abstand zwischen
- dem Ballenschieber (4, 5) und
- der Ballenstützvorrichtung (8)
verringert.

18. Ballenformsystem nach einem der Ansprüche 15 bis 17,
**dadurch gekennzeichnet, dass**
der Ballenträger (2) um eine Trägerdrehachse (49) relativ zu der Ballenformvorrichtung (60) verschwenkbar ist und
der Ballenschieber (4, 5) um eine Schieberdrehachse (4) relativ zu dem Ballenträger (2) drehbar ist,
wobei die Schieberdrehachse (4) zwischen
- der Trägerdrehachse (49) und
- der Ballenstützvorrichtung (8)
angeordnet ist.

19. Ballenformsystem nach einem der Ansprüche 15 bis 18,
**dadurch gekennzeichnet, dass**
der sich in der Arbeitsstellung befindende Ballenschieber (4, 5)
- winkelig oberhalb der Ballenstützvorrichtung (8) angeordnet ist und
- angeordnet ist, um einen Ballen (B) auf der Ballenstützvorrichtung (8) daran zu hindern, sich in Richtung des Ballenträgers (2) zu bewegen.

20. Ballenpress- und -einwickelkombination,
**gekennzeichnet durch**
- ein Ballenformsystem nach einem der Ansprüche 15 bis 19 und
- einer Balleneinwickelvorrichtung (62),
wobei die Ballenstützvorrichtung (8) des Ballenformsystems
- zu der Balleneinwickelvorrichtung (62) gehört und
- angeordnet ist, um einen einzuwickelnden Ballen (B) zu tragen, und
wobei die Balleneinwickelvorrichtung (62) angeordnet ist, um einen auf der Ballenstützvorrichtung (8) getragenen Ballen (B) einzuwickeln.

21. Verfahren zum Formen eines Ballens (B)
durch Verwendung eines Ballenformsystems, mit
- einer Ballenformvorrichtung (60)), die eine Ballenformkammer (Ch) bereitstellt, und
- einer Ballenübertragungseinheit (61) mit einem Ballenträger (2) und einem Ballenübertragungsaktuator (12.l, 12.r),
wobei der Ballenträger (2) relativ zu der Ballenformvorrichtung (60) zwischen
- einer Ballenempfangsstellung und
- einer Ballenabgabestellung
beweglich ist,
wobei das Verfahren die folgenden Schritte aufweist:
- die Ballenformvorrichtung (60) formt den Ballen (B) in der bereitgestellten Ballenformkammer (Ch) und wirft den geformten Ballen (B) aus der Ballenformkammer (Ch) aus,
- der ausgeworfene Ballen (B) bewegt sich auf den sich in der Ballenempfangsstellung befindenden Ballenträger (2),
- der Ballenübertragungsaktuator (12.l, 12.r) bewegt den den Ballen (B) tragenden Ballenträger (2) relativ zu der Ballenformvorrichtung (60) von der Ballenempfangsstellung in die Ballenabgabestellung, und
- der sich in der Ballenabgabestellung befindende Ballenträger (2) bewirkt, dass sich der getragene Ballen (B) von dem Ballenträger (2) in eine Richtung weg von der Ballenformvorrichtung (60) bewegt,
**dadurch gekennzeichnet, dass**
die Ballenübertragungseinheit (61) weiterhin das Folgende aufweist:
- einen beweglichen Ballenschieber (4, 5) und
- eine mechanische Kopplungsvorrichtung (16.l, 16.r),
wobei der Ballenschieber (4, 5) relativ zu dem Ballenträger (2) zwischen
- einer Parkstellung und
- einer Arbeitsstellung
beweglich ist,
wobei die mechanische Kopplungsvorrichtung (16.l, 16.r)
- die Bewegung des Ballenträgers (2) von der Ballenempfangsstellung in die Ballenabgabestellung mit
- einer Bewegung des Ballenschiebers (4, 5) relativ zu dem Ballenträger (2) von der Parkstellung in die Arbeitsstellung
koppelt,
wobei der Schritt, dass der Ballenübertragungsaktuator (12.l, 12.r) den Ballenträger (2) in die Ballenabgabestellung bewegt, bewirkt, dass der Ballenschieber (4, 5) von der Parkstellung in die Arbeitsstellung bewegt wird, und
wobei das Ereignis, dass der Ballenträger (2) die Ballenabgabestellung erreicht, bewirkt, dass der sich nun in der Arbeitsstellung befindende Ballenschieber (4, 5) verhindert, dass der Ballen (B), der von dem Ballenträger (2) weg bewegt wurde, in Richtung der Ballenformvorrichtung (60) bewegt wird.

22. Ballenformverfahren nach Anspruch 21,
**dadurch gekennzeichnet, dass**
der Schritt, dass der Ballenschieber (4, 5) von der Parkstellung in die Arbeitsstellung bewegt wird, den Schritt aufweist, dass sich der Abstand zwischen
- dem Ballenschieber (4, 5) und
- der Ballenformvorrichtung (60)
vergrößert.

23. Ballenformverfahren nach Anspruch 21 oder Anspruch 22,
**dadurch gekennzeichnet, dass**
der Schritt, dass der Ballenübertragungsaktuator (2.l, 12.r) den Ballenträger (2) in die Ballenabgabestellung bewegt, den Schritt verursacht, dass der Ballenträger (2) relativ zu der Ballenformvorrichtung (60) weg von der Ballenformvorrichtung (60) gedreht wird und
der Schritt, dass der Ballenschieber (4, 5) in die Arbeitsstellung bewegt wird, den Schritt aufweist, dass der Ballenschieber (4, 5) relativ zu dem Ballenträger (2) weg von der Ballenformvorrichtung (60) bewegt wird.

24. Ballenformverfahren nach einem der Ansprüche 21 bis 23,
**dadurch gekennzeichnet, dass**
der Ballenschieber (4, 5)
- eine mit dem Ballenträger (2) verbundene Quer-Ballenschieberstange (4) und
- ein an der Ballenschieberstange (4) montiertes Schieberelement (5) aufweist,
wobei der Schritt, dass der Ballenschieber (4, 5) in die Arbeitsstellung bewegt wird, die Schritte aufweist, dass
die Ballenschieberstange (4) relativ zu dem Ballenträger (2) verschwenkt wird, und
die Ballenschieberstange (4) das Schieberelement (5) weg von der Ballenformvorrichtung (60) bewegt.

25. Ballenformverfahren nach einem der Ansprüche 21 bis 24,
**dadurch gekennzeichnet, dass**
das Ballenformsystem weiterhin eine Ballenstützvorrichtung (8) aufweist,
wobei der Ballenträger (2) zwischen
- der Ballenformvorrichtung (60) und
- der Ballenstützvorrichtung (8)
angeordnet ist,
wobei der Schritt, dass der getragene Ballen (B) veranlasst wird, sich weg von der Ballenformvorrichtung (60) zu bewegen, den Schritt aufweist, dass sich der Ballen (B) von dem sich in der Ballenabgabestellung befindenden Ballenträger (2) auf die Ballenstützvorrichtung (8) bewegt.

26. Ballenformverfahren nach Anspruch 25,
**dadurch gekennzeichnet, dass**
sich der Abstand zwischen dem Ballenschieber (4, 5) und der Ballenstützvorrichtung (8) verringert, wenn der Ballenschieber (4, 5) von der Parkstellung in die Arbeitsstellung bewegt wird.

27. Ballenformverfahren nach Anspruch 26,
**dadurch gekennzeichnet, dass**
der Schritt, dass der Ballenübertragungsaktuator (12.l, 12.r) den Ballenträger (2) in die Ballenabgabestellung bewegt, den Schritt bewirkt, dass der Ballenträger (2) relativ zu der Ballenformvorrichtung (60) in Richtung der Ballenstützvorrichtung (8) gedreht wird und
der Schritt, dass der Ballenschieber (4, 5) in die Arbeitsstellung bewegt wird, den Schritt aufweist, dass der Ballenschieber (4, 5) relativ zu dem Ballenträger (2) in Richtung der Ballenstützvorrichtung (8) bewegt wird.

28. Verfahren zum Formen und Einwickeln eines Ballens (B) durch Verwendung einer Ballenpress- und -einwickelkombination, die Folgendes aufweist:
- eine Ballenformvorrichtung (60), die eine Ballenformkammer (Ch) bereitstellt,
- eine Balleneinwickelvorrichtung (62) mit einer Ballenstützvorrichtung (8), und
- eine Ballenübertragungseinheit (61) mit einem Ballenträger (2) und einem Ballenübertragungsaktuator (12.l, 12.r),
wobei das Verfahren den Schritt aufweist, dass der Ballen (B) geformt und gemäß einem der Ansprüche 25 bis 27 auf die Ballenstützvorrichtung (8) bewegt wird und
wobei das Verfahren den weiteren Schritt aufweist, dass die Balleneinwickelvorrichtung (62) den auf der Ballenstützvorrichtung (8) getragenen Ballen (B) einwickelt.

29. Ballenform- und -einwickelverfahren nach Anspruch 28,
**dadurch gekennzeichnet, dass**
das Verfahren den weiteren Schritt aufweist, dass
der Ballenübertragungsaktuator (12.l, 12.r) den Ballenträger (2)
- von der Ballenabgabestellung
- zurück in die Ballenempfangsstellung
bewegt, nachdem sich der Ballen (B) auf die Ballenstützvorrichtung (8) bewegt hat und vor oder während der Schritt des Einwickelns des Ballens (B) auf der Ballenstützvorrichtung (8) ausgeführt wird.

## Revendications

1. Ensemble de formation de balle comprenant
un dispositif de formation de balle (60) intégrant un compartiment de formation de balle (Ch) et
une unité de transfert de balle (61) comportant un élément de transport de balle (2) et un actionneur de transfert de balle (12.l, 12.r),
dans lequel l'élément de transport de balle (2) est agencé de manière à transporter une balle (B),
dans lequel l'élément de transport de balle (2) peut être déplacé par rapport au dispositif de formation de balle (60) entre
une position de réception de balle et
une position de dépôt de balle,
dans lequel le dispositif de formation de balle (60) est agencé de manière à former une balle (B) dans le compartiment de formation de balle (Ch) et
à éjecter la balle (B) formée hors du compartiment de formation de balle (Ch), dans lequel l'élément de transport de balle (2), lorsqu'il est dans la position de réception de balle, est positionné au moins en partie au-dessous du compartiment de formation de balle (Ch),
étant ainsi agencé afin de recevoir une balle (B) éjectée,
dans lequel l'actionneur de transfert de balle (12.l, 12.r) est agencé afin de déplacer l'élément de transport de balle (2) transportant la balle (B)
à partir de la position de réception de balle
vers la position de dépôt de balle,
dans lequel l'élément de transport de balle (2), lorsqu'il est dans la position de dépôt de balle, est agencé afin d'amener une balle (B) transportée à se déplacer à partir de l'élément de transport de balle (2) dans une direction s'écartant du dispositif de formation de balle (60),
**caractérisé en ce que**
l'unité de transfert de balle (61) comprend, en outre,
un poussoir de balle (4, 5) et
un dispositif de couplage mécanique (16.l, 16.r),
dans lequel le poussoir de balle (4, 5) peut être déplacé par rapport à l'élément de transport de balle (2) entre
une position de stationnement et
une position de travail,
dans lequel lorsque le poussoir de balle (4, 5) est dans la position de travail, il est situé entre
le dispositif de formation de balle (60) et
une balle (B) sur l'élément de transport de balle (2) ou ayant quitté l'élément de transport de balle (2) qui est dans la position de dépôt de balle, et
dans lequel le dispositif de couplage mécanique (16.l, 16.r) couple
un mouvement de l'élément de transport de balle (2) à partir de la position de réception de balle vers la position de dépôt de balle avec
un mouvement du poussoir de balle (4, 5) à partir de la position de stationnement vers la position de travail.

2. Ensemble de formation de balle selon la revendication 1, **caractérisé en ce que**
l'élément de transport de balle (2) peut pivoter par rapport au dispositif de formation de balle (60) autour d'un axe de rotation d'élément de transport (49) et
le poussoir de balle (4, 5) peut tourner par rapport à l'élément de transport de balle (2) autour d'un axe de rotation de poussoir (4).

3. Ensemble de formation de balle selon la revendication 2, **caractérisé en ce que**
l'axe de rotation d'élément de transport (49) est positionné entre l'axe de rotation de poussoir (4) et
le dispositif de formation de balle (60).

4. Ensemble de formation de balle selon l'une des revendications précédentes,
**caractérisé en ce que**
l'ensemble formation de balle comprend un châssis (6) appartenant au dispositif de formation de balle (60) ou le supportant,
dans lequel l'élément de transport de balle (2) peut être déplacé par rapport au châssis (6) entre
la position de réception de balle et
la position de dépôt de balle et
dans lequel le dispositif de couplage mécanique (16.l, 16.r) est couplé au châssis (6) et au poussoir de balle (4, 5) et
peut être déplacé par rapport à l'élément de transport de balle (2).

5. Ensemble de formation de balle selon la revendication 4,
**caractérisé en ce que**
le dispositif de couplage mécanique comprend au moins une partie de dispositif de couplage (16.l, 16.r), dans lequel la ou chaque partie de dispositif de couplage (16.l, 16.r) comprend
une tige de liaison (7.l, 7.r),
une première biellette (17.l.f, 17.r.f), et
une seconde biellette (17.l.r, 17.r.r),
dans lequel la première biellette (17, l.f, 17.r.f) couple de manière articulée la tige de liaison (7.l, 7.r) avec le châssis (6) et
dans lequel la seconde biellette (17.l.r, 17.r.r) couple de manière articulée la tige de liaison (7.l, 7.r) avec le poussoir de balle (4, 5).

6. Ensemble de formation de balle selon l'une des revendications précédentes,
**caractérisé en ce que**
le poussoir de balle (4, 5) comprend
une tige de poussoir de balle transversale (4) et
un élément de poussée (5) monté sur la tige (4),
dans lequel la tige de poussoir de balle (4) est reliée
à l'élément de transport de balle (2) et
au dispositif de couplage mécanique (16.l, 16.r), et
dans lequel le mouvement de l'élément de transport de balle (2) dans la position de dépôt de balle provoque un mouvement pivotant forcé de la tige de poussoir de balle (4) par rapport à l'élément de transport de balle (2),
provoquant ainsi le déplacement du poussoir de balle (4, 5) vers la position de travail.

7. Ensemble de formation de balle selon la revendication 6,
**caractérisé en ce que**
le mouvement forcé de la tige de poussoir de balle (4) provoque l'écartement de l'élément de poussée (5) par rapport au dispositif de formation de balle (60).

8. Ensemble de formation de balle selon l'une des revendications précédentes,
**caractérisé en ce que**
le poussoir de balle (4, 5) comprend une tige de poussoir de balle transversale (4) et
l'élément de transport de balle (2) comprend deux plaques parallèles (1.l, 1.r), dans lequel l'élément de transport de balle (2) est agencé afin de transporter une balle (B) entre les plaques (1.l, l.r)
et
dans lequel la tige d'élément de transport de balle transversale (4) est reliée de manière à pouvoir être déplacée avec les deux plaques (1.l, 1.r) de l'élément de transport de balle (2).

9. Ensemble de formation de balle selon la revendication 8,
**caractérisé en ce que**
le poussoir de balle (4, 5) comprend un élément de poussée (5) qui est relié à la tige de poussoir de balle (4),
dans lequel l'élément de poussée (5) est positionné entre les plaques (1.l, 1.r) de l'élément de transport de balle (2),
au moins lorsque le poussoir de balle (4, 5) est dans la position de stationnement.

10. Ensemble de formation de balle selon l'une des revendications précédentes,
**caractérisé en ce que**
un mouvement du poussoir de balle (4, 5)
à partir de la position de stationnement
vers la position de travail augmente la distance entre le poussoir de balle (4, 5) et
le dispositif de formation de balle (60).

11. Ensemble de formation de balle selon l'une des revendications précédentes,
**caractérisé en ce que**
le poussoir de balle (4, 5) peut tourner par rapport à l'élément de transport de balle (2),
dans lequel lorsque le poussoir de balle (4, 5) est dans la position de travail il est orienté à l'écart du dispositif de formation de balle (60),
dans lequel le mouvement du poussoir de balle (4, 5) à partir de la position de stationnement vers la position de travail comprend
un mouvement pivotant du poussoir de balle (4, 5) par rapport à l'élément de transport de balle (2)
qui augmente la hauteur au sol de cette extrémité (15) du poussoir de balle (4, 5).

12. Ensemble de formation de balle selon l'une des revendications précédentes,
**caractérisé en ce que**
le poussoir de balle (4, 5) est monté de manière à pouvoir tourner sur l'élément de transport de balle (2).

13. Ensemble de formation de balle selon l'une des revendications précédentes,
**caractérisé en ce que**
le dispositif de couplage mécanique comprend deux parties de dispositif de couplage (16.1, 16.r),
dans lequel les deux parties de dispositif de couplage (16.1, 16.r) sont couplées au poussoir de balle (4, 5) et
dans lequel l'élément de transport de balle (2) est positionné dans l'espace entre les parties de dispositif de couplage (16.1, 16.r).

14. Ensemble de formation de balle selon l'une des revendications précédentes,
**caractérisé en ce que**
l'unité de transfert de balle (61) comprend, en outre, un capteur de présence de balle
qui est agencé afin de détecter la présence d'une balle (B) sur l'élément de transport de balle (2),
dans lequel l'ensemble formation de balle est agencé afin de déclencher l'actionneur de transfert de balle (12.1, 12.r) de manière à déplacer l'élément de transport de balle (2) dans la position de dépôt de balle
lorsque le capteur de présence de balle a détecté la présence d'une balle (B) sur l'élément de transport de balle (2).

15. Ensemble de formation de balle selon l'une des revendications précédentes,
**caractérisé en ce que**
l'ensemble formation de balle comprend, en outre, un dispositif de support de balle (8),
dans lequel le dispositif de support de balle (8) est agencé afin de transporter une balle (B),
dans lequel l'élément de transport de balle (2) est positionné entre
le dispositif de formation de balle (60) et
le dispositif de support de balle (8),
dans lequel lorsque l'élément de transport de balle (2) est dans la position de dépôt de balle, cela provoque le déplacement d'une balle (B) à partir de l'élément de transport de balle (2) vers le dispositif de support de balle (8), et
dans lequel lorsque le poussoir de balle (4, 5) est dans la position de travail, il est positionné entre
le dispositif de formation de balle (60) et
le dispositif de support de balle (8).

16. Ensemble de formation de balle selon la revendication 15,
**caractérisé en ce que**
lorsque le poussoir de balle (4, 5) est dans la position de travail, il est situé entre l'élément de transport de balle (2), qui est dans la position de dépôt de balle, et
le dispositif de support de balle (8).

17. Ensemble de formation de balle selon la revendication 15 ou 16,
**caractérisé en ce que**
un mouvement du poussoir de balle (4, 5) par rapport à l'élément de transport de balle (2)
à partir de la position de stationnement
vers la position de travail
diminue la distance entre
le poussoir de balle (4, 5) et
le dispositif de support de balle (8).

18. Ensemble de formation de balle selon l'une des revendications 15 à 17,
**caractérisé en ce que**
l'élément de transport de balle (2) peut pivoter par rapport au dispositif de formation de balle (60) autour d'un axe de rotation de l'élément de transport (49) et
le poussoir de balle (4, 5) peut tourner par rapport à l'élément de transport de balle (2) autour d'un axe de rotation de poussoir (4),
dans lequel l'axe de rotation de poussoir (4) est positionné entre l'axe de rotation de l'élément de transport (49) et
le dispositif de support de balle (8).

19. Ensemble de formation de balle selon l'une des revendications 15 à 18,
**caractérisé en ce que**
lorsque le poussoir de balle (4, 5) est dans la position de travail,
il est positionné angulairement au-dessus du dispositif de support de balle (8) et
il est agencé de manière à empêcher le déplacement d'une balle (B) sur le dispositif de support de balle (8) vers l'élément de transport de balle (2).

20. Presse à balle combinée comprenant
**caractérisée en ce que**
un ensemble formation de balle selon l'une des revendications 15 à 19 et
un dispositif d'emballage de balle (62),
dans laquelle le dispositif de support de balle (8) de l'ensemble formation de balle appartient au dispositif d'emballage de balle (62) et
est agencé afin de transporter une balle (B) à envelopper, et
dans laquelle le dispositif d'emballage de balle (62) est agencé afin d'emballer une balle (B) supportée sur le dispositif de support de balle (8).

21. Procédé de formation de balle (B) en utilisant un ensemble formation de balle comprenant
un dispositif de formation de balle (60) intégrant un compartiment de formation de balle (Ch) et
une unité de transfert de balle (61) comportant un élément de transport de balle (2) et un actionneur de transfert de balle (12.1, 12.r),
dans lequel l'élément de transport de balle (2) peut être déplacé par rapport au dispositif de formation de balle (60) entre
une position de réception de balle et
une position de dépôt de balle,
dans lequel le procédé comprend les étapes dans lesquelles
le dispositif de formation de balle (60) forme la balle (B) dans le compartiment de formation de balle (Ch) intégré et éjecte la balle (B) formée hors du compartiment de formation de balle (Ch),
la balle (B) éjectée se déplace sur l'élément de transport de balle (2) qui est dans la position de réception de balle,
l'actionneur de transfert de balle (12.1, 12.r) déplace l'élément de transport de balle (2) transportant la balle (B) par rapport au dispositif de formation de balle (60) à partir de la position de réception de balle vers la position de dépôt de balle, et
lorsque l'élément de transport de balle (2) est dans la position de dépôt de balle, cela provoque le déplacement de la balle (B) transportée à partir de l'élément de transport de balle (2) dans une direction s'écartant du dispositif de formation de balle (60),
**caractérisé en ce que**
l'unité de transfert de balle (61) comprend, en outre,
un poussoir de balle pouvant être déplacé (4, 5) et
un dispositif de couplage mécanique (16.1, 16.r),
dans lequel le poussoir de balle (4, 5) peut être déplacé par rapport à l'élément de transport de balle (2) entre :
une position de stationnement et
une position de travail,
dans lequel le dispositif de couplage mécanique (16.1, 16.r) couple
le mouvement de l'élément de transport de balle (2) à partir de la position de réception de balle vers la position de dépôt de balle avec
un mouvement du poussoir de balle (4, 5) par rapport à l'élément de transport de balle (2) à partir de la position de stationnement vers la position de travail,
dans lequel l'étape dans laquelle l'actionneur de transfert de balle (12.1, 12.r) déplace l'élément de transport de balle (2) vers la position de dépôt de balle provoque le déplacement du poussoir de balle (4, 5) à partir de la position de stationnement vers la position de travail, et
dans lequel l'événement dans lequel l'élément de transport de balle (2) atteint la position de dépôt de balle
fait que le poussoir de balle (4, 5), à cet instant dans la position de travail, empêche le déplacement de la balle (B), qui a été écartée de l'élément de transport de balle (2), vers le dispositif de formation de balle (60).

22. Procédé de formation de balle selon la revendication 21,
**caractérisé en ce que**
l'étape dans laquelle le poussoir de balle (4, 5) est déplacé à partir de la position de stationnement vers la position de travail comprend l'étape dans laquelle
la distance entre
le poussoir de balle (4, 5) et
le dispositif de formation de balle (60)
augmente.

23. Procédé de formation de balle selon la revendication 21 ou 22,
**caractérisé en ce que**
l'étape dans laquelle l'actionneur de transfert de balle (12.1, 12.r) déplace l'élément de transport de balle (2) vers la position de dépôt de balle provoque l'étape dans laquelle
l'élément de transport de balle (2) est tourné par rapport au dispositif de formation de balle (60) à l'écart du dispositif de formation de balle (60) et
l'étape dans laquelle le poussoir de balle (4, 5) est déplacé vers la position de travail comprend l'étape dans laquelle
le poussoir de balle (4, 5) est déplacé par rapport à l'élément de transport de balle (2) à l'écart du dispositif de formation de balle (60).

24. Procédé de formation de balle selon l'une des revendications 21 à 23,
**caractérisé en ce que**
le poussoir de balle (4, 5) comprend
une tige de poussoir de balle transversale (4) qui est reliée à l'élément de transport de balle (2) et
un élément de poussée (5) qui est monté sur la tige de poussoir de balle (4),
dans lequel l'étape dans laquelle le poussoir de balle (4, 5) est déplacé vers la position de travail comprend les étapes dans lesquelles
la tige de poussoir de balle (4) est amenée à pivoter par rapport à l'élément de transport de balle (2), et
le pivotement de la tige de poussoir de balle (4) déplace l'élément de poussée (5) à l'écart du dispositif de formation de balle (60).

25. Procédé de formation de balle selon l'une des revendications 21 à 24,
**caractérisé en ce que**
l'ensemble formation de balle comprend, en outre, un dispositif de support de balle (8),
dans lequel l'élément de transport de balle (2) est positionné entre
le dispositif de formation de balle (60) et
le dispositif de support de balle (8),
dans lequel l'étape dans laquelle la balle (B) transportée est amenée à s'écarter du dispositif de formation de balle (60) comprend l'étape dans laquelle
la balle (B) se déplace à partir de l'élément de transport de balle (2) qui est dans la position de dépôt de balle vers le dispositif de support de balle (8).

26. Procédé de formation de balle selon la revendication 25,
**caractérisé en ce que**
la distance entre le poussoir de balle (4, 5) et le dispositif de support de balle (8) diminue
lorsque le poussoir de balle (4, 5) est déplacé à partir de la position de stationnement vers la position de travail.

27. Procédé de formation de balle selon la revendication 26,
**caractérisé en ce que**
l'étape dans laquelle l'actionneur de transfert de balle (12.1, 12.r) déplace l'élément de transport de balle (2) dans la position de dépôt de balle provoque l'étape dans laquelle
l'élément de transport de balle (2) est tourné par rapport au dispositif de formation de balle (60) vers le dispositif de support de balle (8) et
l'étape dans laquelle le poussoir de balle (4, 5) est déplacé vers la position de travail comprend l'étape dans laquelle
le poussoir de balle (4, 5) est déplacé par rapport à l'élément de transport de balle (2) vers le dispositif de support de balle (8).

28. Procédé de formation et d'emballage d'une balle (B) en utilisant une presse à balle combinée comprenant
un dispositif de formation de balle (60) intégrant un compartiment de formation de balle (Ch),
un dispositif d'emballage de balle (62) comportant un dispositif de support de balle (8), et
une unité de transfert de balle (61) comportant un élément de transport de balle (2) et un actionneur de transfert de balle (12.1, 12.r),
dans lequel le procédé comprend l'étape dans laquelle la balle (B) est formée et déplacée sur le dispositif de support de balle (8) selon l'une des revendications 25 à 27 et
dans lequel le procédé comprend l'étape supplémentaire dans laquelle le dispositif d'emballage de balle (62) emballe la balle (B) transporté sur le dispositif de support de balle (8).

29. Procédé de formation et d'emballage de balle selon la revendication 28,
**caractérisé en ce que**
le procédé comprend l'étape supplémentaire dans laquelle
l'actionneur de transfert de balle (12.1, 12.r) déplace l'élément de transport de balle (2)
à partir de la position de dépôt de balle
de nouveau vers la position de réception de balle,
après que la balle (B) a été déplacée sur le dispositif de support de balle (8) et avant ou pendant l'exécution de l'étape d'emballage de la balle (B) sur le dispositif de support de balle (8).
